# EUROPEAN PATENT APPLICATION

(11) **EP 1 322 121 A2**
(43) Date of publication of application: **25.06.2003**
(21) Application number: 02028121.8
(22) Date of filing: 18.12.2002
(51) Int. Cl.: H04N 7/36

(54) **Video encoder and decoder with improved motion detection precision**

(30) Priority: 19.12.2001 JP 2001385807
(71) Applicant: MATSUSHITA ELECTRIC INDUSTRIAL CO., LTD., Kadoma-shi, Osaka 571-8501 (JP)
(72) Inventor: Fukuda, Hideki, Nara-shi, Nara 631-0843 (JP); Kondo, Satoshi, Yawata-shi, Kyoto 614-8361 (JP)
(74) Representative: Balsters, Robert

(57) **Abstract**

The present invention provides an encoder for encoding image data according to predictive coding including motion detection, which increases motion detection precision while suppressing an increase in the amount of data processed at the predictive coding. This encoder includes a 4x4 block divider 101 for dividing image data corresponding to a target frame to be processed into 4x4 pixel blocks; a motion compensation unit 111 for performing motion compensation for the image data in units of 4x4 pixel block, thereby to generate predicted data; an 8x8 pixel block configuration unit 103 for transforming difference data between image data corresponding to the 4x4 pixel block and predicted data corresponding to the 4x4 pixel block into prediction error data of an 8x8 pixel block. This encoder carries out a DCT process, a quantization process, and a variable length coding process for prediction error data, in units of 8x8 pixel block.

## Description

### FIELD OF THE INVENTION

The present invention relates to encoders and decoders and, more particularly, to a device that encodes video signals by utilizing inter-frame prediction and a device that decodes coded video signals by utilizing inter-frame prediction.

### BACKGROUND OF THE INVENTION

Conventionally, MPEG coding methods such as TSO/IEC (International Organization for Standardization/International Electrotechnical Commission) 13818-2 (MPEG (Moving Picture Experts Group)-2 video), and ISO/IEC 11172-2 (MPEG-1 video) are generally used as a method for compressively encoding video signals of digital format efficiently.

In the MPEG coding method, an intra-frame coding process in which image data are encoded by utilizing an intra-frame correlation between pixel values, or an inter-frame coding process in which image data are encoded by utilizing an inter-frame correlation between pixel values is adaptively selected. In the MPEG coding method, coding of image data corresponding to a moving image is performed taking image data corresponding to plural successive frames as one unit. These plural successive frames as a unit of the coding are herein referred to as a group of pictures (GOP). More specifically, in this MPEG coding method, at least one of these plural successive frames that constitute the GOP is subjected to the intra-frame coding process, and the remaining frames are subjected to the inter-frame coding process.

The inter-frame coding process includes two processes, i.e., an inter-frame forward predictive coding process and an inter-frame bidirectional predictive coding process. Frames that are subjected to the inter-frame forward predictive coding process are referred to as P frames, and frames that are subjected to the inter-frame bidirectional predictive coding process are referred to as B frames. P frame is subjected to the predictive coding process with referring to a frame that is situated forward of the P frame (reference frame) on the axis of display time. B frame is subjected to the predictive coding process with referring to two frames that are adjacent to the B frame and situated forward and backward of the B frame on the axis of display time (reference frames). Usually, in the coding of P frame, I frame which is adjacent to the P frame is used as the reference frame, and in the coding of B frame, ] frame and P frame or two P frames which are adjacent to the B frame are used as the reference frames.

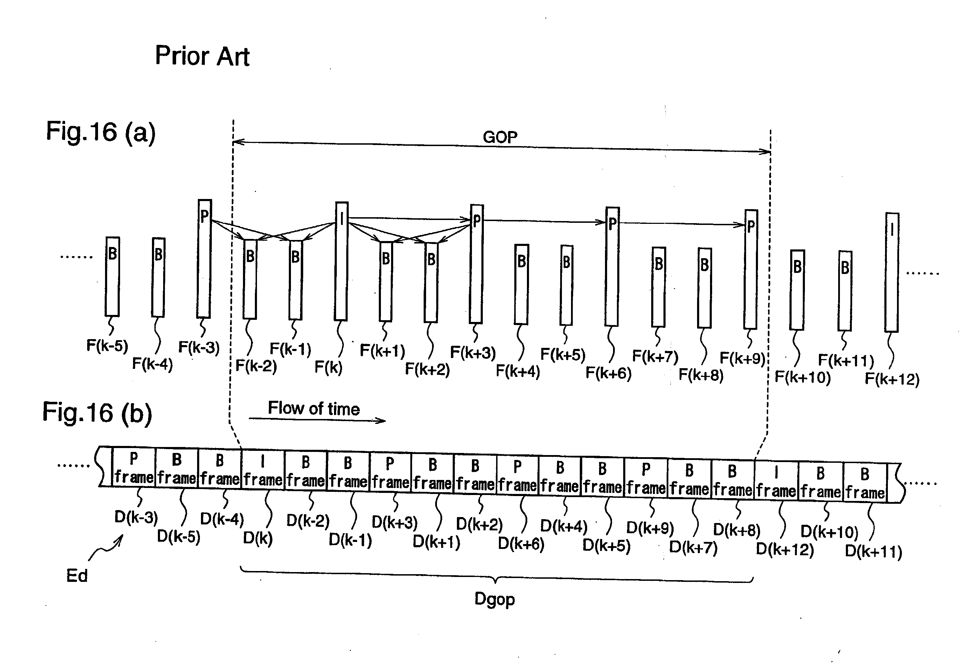

Figs. 16 are diagrams for specifically explaining plural frames that constitute one GOP (Fig. 16(a)), and coded data corresponding to the GOP (Fig. 16(b)). Figs. 16 show plural successive frames F(k-5) to F(k+12) and coded data D(k-5) to D(k+12) corresponding to the respective frames. Here, k is an arbitrary integer. The frames F(k-5) to F(k+12) are arranged in the order of time these frames are displayed, while the data D (k-5) to D(k+12) corresponding to the frames F(k-5) to F(k+12) are arranged in the order of time these data are coded (in other words, in the order of time these data are decoded).

To be more specific, the frames F(k) and F(k+12) are intra-frame coding frames (I frames), frames F(k-3), F(k+3), F(k+6), and F(k+9) are inter-frame forward prediction coding frames (P frames), and frames F(k-5), F(k-4), F(k-2), F(k-1), F(k+1), F(k+2), F(k+4), F(k+5), F(k+7), F(k+8), F(k+10), and F(k+11) are inter-frame bidirectional prediction coding frames (B frames). Data D(k) and D(k+12) are coded data corresponding to the I frame, data D(k-3), D(k+3), D(k+6), and D(k+9) are coded data corresponding to the P frames, and data D(k-5), D(k-4), D(k-2) D(k-1), D(k+1), D(k+2), D(k+4), D(k+5), D(k+7), D(k+8), D(k+10), and D(k+11) are coded data corresponding to the B frames.

Here, one GOP is composed of 12 frames, i.e., B frame F(k-2) to P frame (k+9). For example, P frame F(k+3) is subjected to the inter-frame predictive coding process by using I frame F(k) as a reference frame. P frame F(k+6) is subjected to the inter-frame predictive coding process by using P frame F(k+3) as a reference frame. Further, B frames F(k+1) and F(k+2) are subjected to the inter-frame predictive coding process by using I frame F(k) and P frame F(k+3) as reference frames.

To reduce a space of a memory that is used at the decoding process for the coded data corresponding to the respective frames, which have been obtained by the above-mentioned coding process, a process is carried out for transforming an array of the coded data corresponding to the respective frames (array transformation process) from that according to an order in which images of the respective frames are displayed (array in the order of display time) to that according to an order in which the respective frames are subjected to the decoding process (array in the order of decoding time).

More specifically, as shown in Fig. 16(b), as for coded data Ed that is obtained by performing the array transformation process to the coded data corresponding to the GOP, coded data D(k) corresponding to I frame F(k) is situated at the head of coded data Dgrop corresponding to the GOP, which is successively followed by coded data D(k-2) corresponding to B frame F(k-2), coded data D(k-1) corresponding to B frame F(k+1), and coded data D(k+3) corresponding to P frame F(k+3).

Then, the coded data Dgrop corresponding to the GOP are transmitted or recorded according to the order that is obtained by the array transformation process.

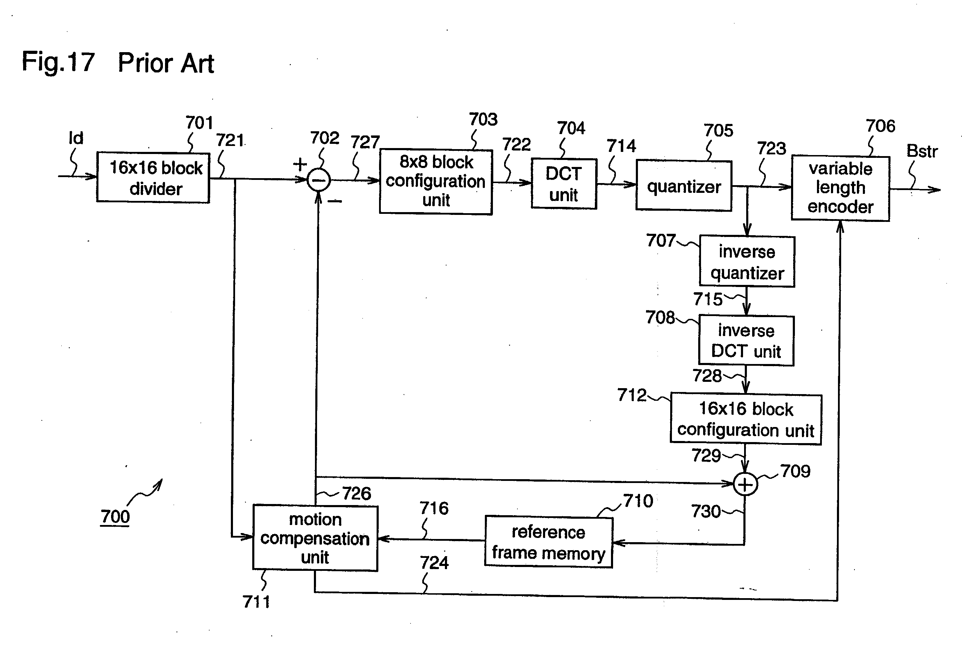

Fig. 17 is a block diagram for explaining an encoder according to the conventional MPEG method.

This encoder 700 subjects an inputted video signal (hereinafter, referred to also as image data) Id to the inter-frame coding process according to the MPEG coding method.

To be more specific, this encoder 700 includes a 16x16 block divider 701 that subjects the inputted image data Id to a process for dividing image data of each frame into 16x16 pixel blocks (macroblocks), each composed of 16 pixels (horizontal) x 16 pixels (vertical), and outputs image data 721 corresponding to each macroblock, and a motion compensation unit 711 that subjects the data 721 outputted from the 16x16 block divider 701 to a motion detection process for each macroblock, and outputs a motion vector 724 and prediction reference data (data of a prediction reference block) 726 for a target block.

Here, the motion detection is a process for detecting a region in a prediction reference frame whose image data is stored in a reference frame memory 710, which region most matches a pixel level pattern corresponding to the target block. For example, a block matching method is employed. The region in the prediction reference frame, which has been detected according to the motion detection, is the prediction reference block. Information that indicates the position of the prediction reference block in the prediction reference frame is the motion vector 724.

The encoder 700 further includes a subtracter 702 that carries out a subtraction process for subtracting the prediction reference block data 726 from the target block data 721, and outputs difference data between these blocks as prediction error data of the 16x16 pixel block (prediction error block data) 727. In the subtraction process, a pixel level of a pixel in the prediction reference block, corresponding to each pixel of the target block is subtracted from a pixel level of each pixel in the target block, pixel by pixel.

The encoder 700 further includes an 8x8 block configuration unit 703 that subjects the image data 727 corresponding to the 16x16 pixel block (macroblock) which is outputted from the subtracter 702, to a process of d.viding each macroblock image data into 8x8 pixel blocks, each being composed of horizontal 8 pixels and vertical 8 pixels, and outputs prediction error data 722 corresponding to each 8x8 pixel block.

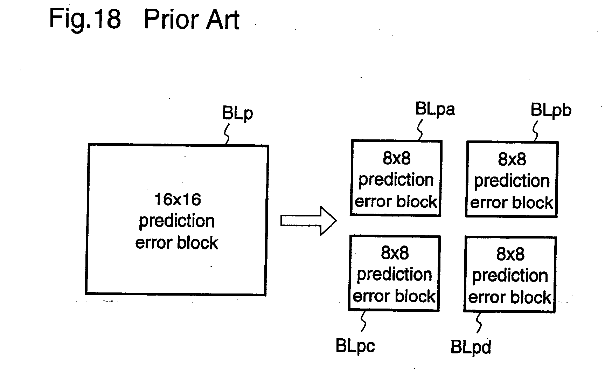

More specifically, in the 8x8 block configuration unit 703, as shown in Fig. 18, a 16x16 pixel block BLp of the prediction error data 727 (16x16 prediction error block) is divided into four 8x8 pixel blocks BLpa, BLpb, BLpc and BLpd of prediction error data 722 (8x8 prediction error blocks).

The encoder 700 further includes a DCT unit 704 that subjects the prediction error data 722 of the 8x8 pixel block, which has been outputted from the 8x8 block configuration unit 703, to two-dimensional discrete cosine transformation (DCT), thereby to output DCT coefficients 714 corresponding to each 8x8 pixel block, and a quantizer 705 that quantizes each DCT coefficient of each 8x8 pixel block outputted from the DCT unit 704, in a predetermined quantization step, to output quantized coefficients 723 corresponding to each 8x8 pixel block.

The encoder 700 further includes a variable length encoder 706 that seans the quantized coefficients 723 of each 8x8 pixel block in a two-dimensional array along a predetermined path to be transformed into a data string in a one-dimensional array, and encodes the one-dimensional data string according to the variable length coding, thereby to output a coded data string Bstr. This variable length encoder 706 also outputs information corresponding to the motion vector 724 that is obtained by the motion compensation unit 711. Thus, the information of the motion vector 724 is attached to the coded data string Bstr that is outputted from the variable length encoder.

The encoder 700 further includes an inverse quantizer 707 that subjects the quantizcd coefficients 723 of each 8x8 pixel block, which is outputted from the quantizer 705, to an inverse quantization process, thereby to reconstitute DCT coefficients of each 8x8 pixel block, and an inverse DCT unit 708 that subjects the DCT coefficients as the output 715 from the inverse quantizer 707 to inverse DCT transformation, thereby to obtain decoded prediction error data of each 8x8 pixel block (decoded prediction error block), and a 16x16 block configuration unit 712 that receives outputs 728 from the inverse DCT unit 708, combines the decoded prediction error data 728 of four 8x8 pixel blocks (8x8 pixel decoded prediction error blocks) to generate decoded data 729 corresponding to a 16x16 pixel block (16x16 decoded prediction error block).

The encoder 700 further includes an adder 709 that adds the decoded prediction error data 729 of the 16x16 pixel block (16x16 decoded prediction error block) and the predicted reference data 726 of the 16x16 pixel block (16x16 prediction reference block), to output decoded data 730 of a 16x16 pixel block (16x16 decoded block), and a reference frame memory 710 that stores the output 730 from the adder 709 as image data of a reference frame which is employed at predictive coding for the next frame of the target frame. In the addition process by the adder 709, the sum of a pixel level of each pixel in the 16x16 decoded prediction error block and a pixel level of a pixel in the 16x16 prediction reference block, corresponding to each pixel in the 16x16 decoded prediction error block is obtained, pixel by pixel.

Next, its operation will be described.

When image data ld of a frame to be processed (target frame) is inputted to the encoder 700, the 16x16 block divider 701 divides the image data ld into 16x16 pixel blocks (macroblocks), thereby outputting image data 721 corresponding to each 16x16 pixel block.

When the image data 721 corresponding to the 16x16 pixel block is inputted to the motion compensation unit 711, the motion compensation unit 711 performs motion detection for the image data 721 corresponding to the 16x16 pixel block to be processed (target block), and outputs a motion vector 724 for the target block and predicted reference data (image data of a 16x16 prediction reference block) 726. According to the motion detection, a region which most matches a pixel level pattern of the 16x16 pixel block is detected in the prediction reference frame that is stored in the reference frame memory 710. For example, this is performed by the block matching method. The region that is detected by the motion detection is a 16x16 prediction reference block corresponding to the target block. Information that indicates a position of the 16x16 prediction reference block in the reference frame is the motion vector 724 corresponding to the target block.

The subtracter 702 carries out the subtraction process of subtracting the 16x16 prediction reference, block image data 726 from the target block image data 721, and outputs prediction error data of the 16x16 pixel block (16x16 prediction error block image data) 727.

Then, the 8x8 block configuration unit 703 divides the prediction error data 727 of the 16x16 pixel block into four 8x8 pixel blocks that constitute the 16x16 pixel block, and outputs the prediction error data of the 8x8 pixel block (8x8 prediction error block image data) 722. To be more specific, the data corresponding to the 16x16 prediction error block BLp is divided into four pieces of data 722 corresponding to 8x8 prediction error blocks BLpa, BLpb, BLpc, and BLpd, as shown in Fig. 18.

When the data 722 of the 8x8 prediction error block is inputted to the DCT unit 704, the DCT unit 704 carries out the two-dimensional discrete cosine transformation (DCT) to the 8x8 prediction error block data 722, thereby to generate DCT coefficients 714 corresponding to the 8x8 prediction error block. The quantizer 705 quantizes the DCT coefficients 714 corresponding to the 8x8 prediction error block in the predetermined quantization step, to generate quantized coefficients 723 corresponding to the 8x8 prediction error block.

The variable length encoder 706 carries out an array transformation process for scanning the plural quantized coefficients 723 in a two-dimensional array corresponding to the 8x8 prediction error block along a predetermined path, to obtain a data string in a one-dimensional array, and encodes the data string according to the variable length coding process, thereby to output a coded data string Bstr. The variable length encoder 706 further attaches the information of the motion vector 724 that is obtained by the motion compensation unit 711 to the coded data string Bstr.

The inverse quantizer 707 subjects the quantized coefficients 723 of the 8x8 prediction error block to an inverse quantization process to reconstitute DCT coefficients 715 of the 8x8 prediction error block. The inverse DCT unit 708 subjects the DCT coefficients 715 of the 8x8 prediction error block to the two-dimensional DCT transformation, to output decoded image data 728 corresponding to the 8x8 prediction error block.

When the decoded image data 728 of the 8x8 prediction error block is inputted to the 16x16 block configuration unit 712, the 16x16 block configuration unit 712 combines four 8x8 prediction error blocks of the decoded image data 728 to configure one 16x16 prediction error block of decoded image data, and outputs decoded image data 729 corresponding to 16x16 prediction error block.

The adder 709 adds the decoded image data 729 of the 16x16 prediction error block and the image data 726 of the 16x16 prediction reference block, to generate decoded image data 730 corresponding to the 16x16 pixel block.

Then, the decoded image data 730 corresponding to the 16x16 pixel block (macroblock) is stored in the reference frame memory 710 as image data of a reference frame that is to be employed at predictive coding of the next frame of the target frame.

Next, a conventional MEPG-4 decoding process for decoding a coded data string that is outputted from the above-mentioned encoder will be described.

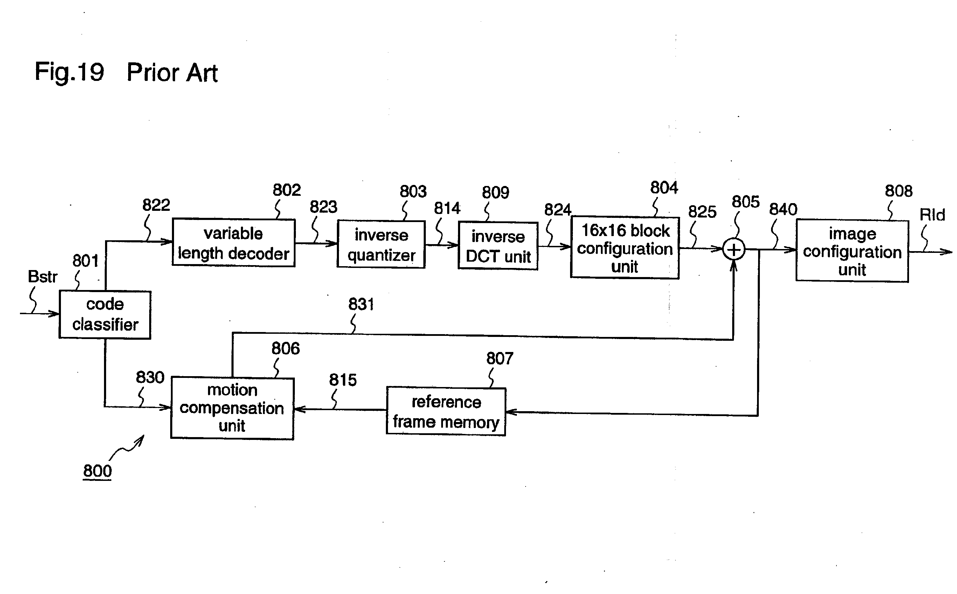

Fig. 19 is a block diagram illustrating a conventional decoder 800.

This decoder 800 decodes the coded data string Bstr that is outputted from the encoder 700 as shown in Fig. 17.

To be more specific, this decoder 800 includes a code classifier 801 that classifies the inputted coded data string Bstr into a code string 822 of quantized coefficients and a motion vector 830, a variable length decoder 802 that subjects the code strinq 822 of the quantized coefficients to a variable length decoding process, thereby to successively obtain quantized coefficients 823 of an 8x8 prediction error block, and a motion compensation unit 806 that refers to image data of a decoded frame, which is stored in a reference frame memory 807, to output image data of a region in the frame, which is indicated by the motion vector 830, as 16x16 prediction reference block data 831.

The decoder 800 further includes an inverse quantizer 803 that subjects the quantized coefficients 823 of the 8x8 prediction error block to an inverse quantization process in the quantization step that has been employed at the coding, to reconstitute DCT coefficients 814 of the 8x8 prediction error block, and an inverse DCT unit 809 that subjects the DCT coefficients 814 of the 8x8 prediction error block to an inverse two-dimensional discrete cosine transformation process to generate decoded image data 824 of the 8x8 prediction error block.

The decoder 800 further includes a 16x16 block configuration unit 804 that carries out a process for combining four 8x8 prediction error blocks of the decoded image data 824 to generate one 16x16 prediction error block of decoded image data 825, and an adder 805 that adds the decoded image data 825 of the 16x16 prediction error block and the image data 831 of the 16x16 prediction reference block which is obtained by the motion compensation unit 806, and outputs decoded image data 840 corresponding to the 16x16 pixel block.

The decoder 800 further includes an image configuration unit 808 that reconstitute image data corresponding to the target frame from the image data 840 corresponding to the 16x16 pixel block, and outputs the reconstituted data as reproduced image data RId, and a reference frame memory 807 that stores the decoded image data 840 of the 16x16 pixel block as image data of a reference frame that is employed at predictive decoding for the next frame of the target frame.

Next, the operation will be described.

When the coded data string Bstr outputted from the above-mentioned encoder 700 is inputted to the decoder 800, the code classifier 801 subjects the coded data string Bstr to the process for classifying the same into a code string 822 of quantized coefficients and a motion vector 830, and then outputs the code string 822 of quantized coefficients and the motion vector 030.

The variable length decoder 802 transforms the code string 822 of the quantized coefficients into quantized coefficients 823 corresponding to the 8x8 prediction error block according to the variable length decoding process. The inverse quantizer 803 subjects the quantized coefficients 823 of the 8x8 prediction error block to an inverse quantization process in the quantization step that has been employed at the coding in the encoder 700, thereby to reconstitute DCT coefficients 814 corresponding to the 8x8 prediction error block. The inverse DCT unit 809 subjects the DCT coefficients 814 of the 8x8 prediction error block to an inverse two-dimensional discrete cosine transformation process to be transformed into decoded image data 824 of the 8x8 prediction error block.

The 16x16 block configuration unit 804 combines four 8x8 prediction error blocks of the decoded image data 828 to generate one 16x16 prediction error block of decoded image data, and outputs the decoded image data 825 of the 16x16 prediction error block.

Further, the motion compensation unit 806 performs the motion compensation that refers to the image data of a decoded frame which is stored in the reference frame memory 807, to generate image data of a region in the frame, which is indicated by the motion vector 830, and outputs the generated image data as data 831 of the 16x16 prediction reference block.

The adder 805 adds the decoded image data 806 of the 16x16 prediction error block and the image data of the 16x16 prediction reference block 831 which has been obtained in the motion compensation unit 806, thereby to generate decoded image data 840 corresponding to the 16x16 pixel block.

The image configuration unit 808 generates image data corresponding to the frame, from the decoded image data 840 corresponding to the 16x16 pixel block, and outputs the generated data as reproduced image data RId.

Further, the decoded image data 840 corresponding to the 16x16 pixel block, which is outputted from the adder 805 is stored in the reference frame memory 807 as data of a reference frame that is employed at predictive decoding for the next frame of the target frame.

However, in the conventional MPEG coding method, when the size of an image to be handled is smaller, its minute motion is not detected, resulting in reduced prediction efficiency.

To put it simply, according to the conventional MPEG coding method, the motion compensation is performed in units of block (macroblock) that is composed of 16 x 16 pixels, while the DCT transformation and the quantization are performed in units of block (sub-block) that is composed of 8x8 pixels. Further, in the case of NTSC (National Television Standards Committee) television format, an image to be handled according to MPEG is usually composed of horizontal 720 pixels x vertical 480 lines (720 x 480 pixels) .

In the case of NTSC television format, as 720 x 480 pixels are usually employed as the size of an image corresponding to one frame, there arise no serious problem in that the motion compensation that is performed in units of macroblock that is composed of 16 x 16 pixels. However, when the size of an image corresponding to one frame is smaller, for example when an image of one frame is composed of approximately 276 x 144 pixels, the relative size of the macroblock with respect to one frame is about four times as large as the relative size of the macroblock with respect to a frame that is composed of 720 x 480 pixels.

Therefore, when the size of an image of one frame is smaller, when the motion compensation is performed in units of macroblock (16 x 16 pixels), only rough motion is detected, resulting in a reduced prediction efficiency.

Further, at the compressive coding of image data, when the unit that is to be subjected to the DCT transformation (DCT block) is larger, significant coefficients concentrate more onto lower frequency components, resulting in an increased compression erficiency for image data, while when the DCT block is larger, the quantity of DCT transformation is unfavorably increased.

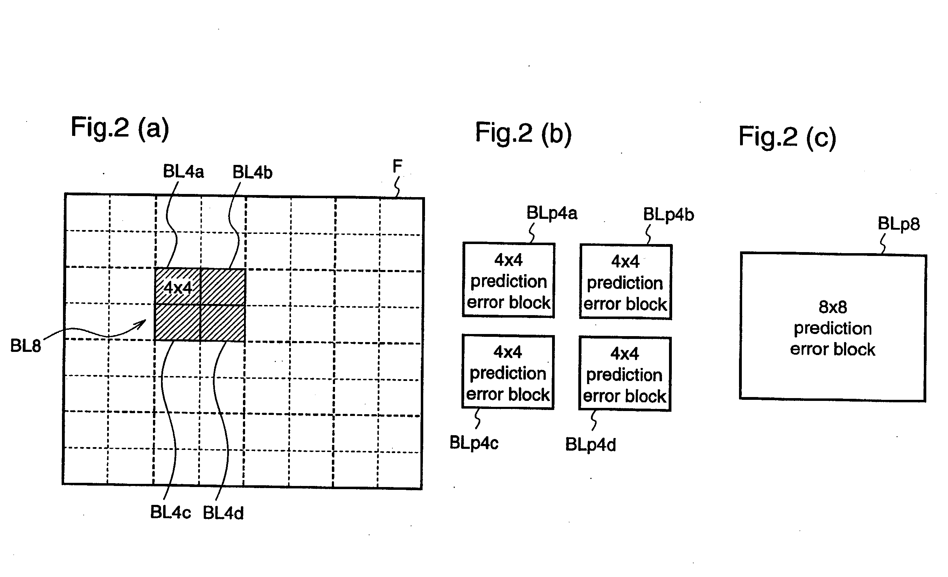

"The Series of Introduction to High Technology" (published by Ohmsha,Ltd.) (Image information compression, edited by the Institute of Image Information and Television Engineers (ITE), supervised by Hiroshi Harashima, August 25, 1991, pp. 102-103, Chapter 5, Approach to transformation coding, 5-2, Features of Orthogonal transformation and their comparison (Fig. 2.6 etc.)) describes the size of the DCT block and the coding efficiency.

### SUMMARY OF THE INVENTION

The present invention provides to an encoding and decoding method, and an encoder and decoder, which can increase precision of motion detection while suppressing an increase in the amount of data processed in predictive coding or predictive decoding.

Other objects and advantages of the invention will become apparent from the detailed description that follows. The detailed description and specific embodiments described are provided only for illustration since various additions and modifications within the spirit and scope of the invention will be apparent to those of skill in the art from the detailed description.

According to a 1st aspect of the present invention, there is provided an encoder that predictively encodes image data in units of frame, by using a pixel value correlation between frames, including: a data prediction unit for performing a prediction process of predicting image data corresponding to a target frame to be processed, in units of prediction block being composed of plural pixels, which is obtained by dividing the target frame, thereby to generate predicted image data; and a data encoding unit for encoding the image data corresponding to the target frame in units of encoding block that is composed of a plurality of the prediction blocks, by using predicted image data corresponding to the encoding block. Therefore, finer motion detection can be performed, thereby increasing the coding efficiency. To be more specific, the compression rate at the predictive coding is increased by increasing the block size for transformation coding such as DCT transformation, while finer motion detection is realized by reducing the unit size for motion compensation. Accordingly, the quality of an image that is reproduced with a limited amount of codes can be increased, thereby greatly improving the image quality particularly when the image size is small.

According to a 2nd aspect of the present invention, in the encoder of the 1st aspect, the data prediction unit includes a data generation unit for generating predicted image data corresponding to each of plural kinds of prediction blocks having different configurations; and selects, from the predicted image data corresponding to the plural kinds of prediction blocks having different configurations, predicted image data corresponding to a prediction block having a highest coding efficiency for the encoding block, thereby to generate predicted image data corresponding to the encoding block. Therefore, motion compensation with higher precision corresponding to the motion of the image can be performed, thereby increasing the coding efficiency.

According to a 3rd aspect of the present invention, in the encoder of the 2nd aspect, the data prediction unit outputs block identification information that indicates predicted image data of a prediction block having a configuration, which is selected from the predicted image data corresponding to the plural kinds of prediction blocks having different configurations. Therefore, a configuration of a prediction block can be recognized at the decoding.

According to a 4th aspect of the present invention, in the encoder of the 1st aspect, the data prediction unit includes a data generation unit for generating predicted image data corresponding to each of plural kinds of prediction blocks having different configurations; and combines the predicted image data corresponding to the plural kinds of prediction blocks having different configurations so that the plural kinds of prediction blocks are arranged in the encoding block according to an arrangement pattern having a highest coding efficiency for the encoding block, thereby to generate predicted image data corresponding the encoding block. Therefore, motion compensation with higher precision corresponding to the configuration and motion of a moving image in a frame can be performed, thereby increasing the coding efficiency.

According to a 5th aspect of the present invention, in the encoder of the 4th aspect, the data prediction unit outputs block arrangement information that indicates the arrangement pattern of the plural kinds of prediction blocks in the encoding block. Therefore, an arrangement pattern according which prediction error blocks are arranged in an encoding block can be recognized at the decoding.

According to a 6th aspect of the present invention, there is provided an encoder that predictively encodes image data in units of frame, by using a pixel value correlation between frames, including: a first predictive coding unit that includes: a first data prediction unit for performing a prediction process of predicting image data corresponding to a target frame to be processed, in units of first prediction block being composed of plural pixels, which is obtained by dividing the target frame, thereby to generate first predicted image data; and a first data encoding unit for encoding the image data corresponding to the target frame in units of first encoding block that is composed of a plurality of the first prediction blocks, by using first predicted image data corresponding to the first encoding block; a second predictive coding unit that includes: a second data prediction unit for performing a prediction process of predicting image data corresponding to a target frame to be processed, in units of second prediction block being composed of plural pixels, which is obtained by dividing the target frame, thereby to generate second predicted image data; and a second data encoding unit for encoding the image data corresponding to the target frame in units of second encoding block that in obtained by dividing the second prediction block, by using second predicted image data corresponding to the second encoding block; and a selector for supplying the image data to one of the first predictive coding unit and the second predictive coding unit, in accordance with a instruction signal from outside. Therefore, predictive coding in which higher precision motion compensation for image data is performed, and predictive coding in which normal precision motion compensation for image data is performed are switched according to the size of the image to be handled or the like.

According to a 7th aspect of the present invention, there is provided an encoding method for predictively encoding image data in units of frame, by using a pixel value correlation between frames, including: a prediction step of performing a prediction process of predicting image data corresponding to a target frame to be processed, in units of prediction block being composed of plural pixels, which is obtained by dividing the target frame, thereby generating predicted image data; and an encoding step of encoding the image data corresponding to the target frame in units of encoding block that is composed of a plurality of the prediction blocks, by using predicted image data corresponding to the encoding block. Therefore, finer motion detection can be performed, thereby increasing the coding etficiency.

According to an 8th aspect of the present invention, in the encoding method of the 7th aspect, the prediction step includes steps of: generating predicted image data corresponding to each of plural kinds of prediction blocks having different configurations; selecting, from the predicted image data correspond to the plural kinds of prediction blocks having different configurations, predicted image data corresponding to a prediction block having a highest coding efficiency for the encoding block; and generating predicted image data corresponding to the encoding block from the predicted image data of the selected prediction block. Therefore, higher precision motion detection corresponding to the motion of the image in a frame can be performed, thereby increasing the coding efficiency.

According to a 9th aspect of the present invention, in the encoding method of the 8th aspect, the prediction step includes a step of: generating block indication information that indicates predicted image data of a prediction block having a configuration, which is selected from the predicted image data corresponding to the plural kinds of prediction blocks having different configurations. Therefore, the configuration of the prediction block can be recognized at the decoding.

According to a 10th aspect of the present invention, in the encoding method of the 7th aspect, the prediction step including steps of: generating predicted image data corresponding to each of plural kinds of prediction blocks having different configurations; deciding an arrangement pattern in which the plural kinds of prediction blocks are arranged in the encoding block, so as to have a highest coding efficiency for the encoding block; and combining the predicted image data corresponding to the plural kinds of prediction blocks having different configurations so that the plural kinds of prediction blocks are arranged in the encoding block according to the decided arrangement pattern, thereby generating predicted image data corresponding to the encoding block. Therefore, higher precision motion detection corresponding to the configuration or motion of a moving image in a frame can be performed, thereby increasing the coding efficiency.

According to an 11th aspect of the present invention, in the encoding method of the 10th aspect, the prediction step including a step of: generating block arrangement information that indicates the arrangement pattern of the plural kinds of prediction blocks in the encoding block. Therefore, an arrangement pattern according which prediction error blocks are arranged in an encoding block can be recognized at the decoding.

According to a 12th aspect of the present invention, there is provided a decoder that predictively decodes coded data which is obtained by predictively coding image data, in units of frame, by using a pixel value correlation between frames, including: a data prediction unit for performing a prediction process of predicting image data corresponding a target frame to be processed, in units of prediction block being composed of plural pixels, which is obtained by dividing the target frame, thereby to generate predicted image data; and a data decoding unit for decoding the coded data corresponding to the target frame in units of decoding block that is composed of a plurality of the prediction blocks, by using predicted image data corresponding to the decoding block. Therefore, a coded data string that has been coded with finer motion detection can be properly decoded, and accordingly an image of higher image quality can be reproduced from the coded data that has been coded with higher coding efficiency.

According to a 13th aspect of the present invention, in the decoder of the 12th aspect, the data prediction unit includes a data generation unit for generating predicted image data corresponding to each of plural kinds of prediction blocks having different configurations; and selects predicted image data corresponding to a prediction block having a predetermined configuration, in accordance with block identification information that indicates predicted image data of a prediction block having a configuration, which was selected from the predicted image data corresponding to the plural kinds of prediction blocks having different configurations at predictive coding of the image data, thereby generating predicted image data corresponding to the decoding block from the predicted image data of the selected prediction block. Therefore, image data which has been coded with higher precision motion detection corresponding to the motion of the image can be properly decoded, and accordingly an image of higher image quality can be reproduced from the coded data that has been coded with higher coding efficiency.

According to a 14th aspect of the present invention, in the decoder of the 12th aspect, the data prediction unit includes a data generation unit for generating predicted image data corresponding to each of plural kinds of prediction blocks having different configurations; and combines the predicted image data corresponding to the plural kinds of prediction blocks having different configurations, in accordance with block arrangement information that indicates an arrangement pattern of the plural prediction blocks in the decoding block, thereby generating predicted image data corresponding to the decoding block. Therefore, coded data which has been coded with higher precision motion detection corresponding to the configuration or motion of a moving image in a frame can be properly decoded, and accordingly an image of higher image quality can be reproduced from coded data that has been coded with higher coding efficiency.

According to a 15th aspect of the present invention, there is provided a decoder that predictively decodes coded data which is obtained by predictively coding image data, in units of frame, by using a pixel value correlation between frames, including: a first predictive decoding unit that includes: a first data prediction unit for performing a prediction process of predicting image data corresponding to a target frame to be processed, in units of first prediction block being composed of plural pixels, which is obtained by dividing the target frame, thereby to generate first predicted image data; and a first data decoding unit for decoding coded data corresponding to the target frame in units of first decoding block that is composed of a plurality of the first prediction blocks, by using first predicted image data corresponding to the first decoding block; a second predictive decoding unit that includes: a second data prediction unit for performing a prediction process of predicting image data corresponding to a target frame to be processed, in units of second prediction block being composed of plural pixels, which is obtained by dividing the frame, thereby to generate second predicted image data; and a second data decoding unit for decoding coded data corresponding to the target frame in units of second decoding block that is obtained by dividing the second prediction block, by using second predicted image data corresponding to the second decoding block; and a selector for supplying the coded data to one of the first predictive decoding unit and the second predictive decoding unit, in accordance with an instruction signal from outside. Therefore, predictive decoding in which higher precision motion compensation for image data is performed, and predictive decoding in which normal precision motion compensation for image data is performed can be switched according to the size of the image to he handled or the like.

According to a 16th aspect of the present invention, there is provided a decoding method for predictively decoding coded data that is obtained by predictively coding image data, in units of frame, by using a pixel value correlation between frames, including: a prediction step of performing a prediction process of predicting image data corresponding to a target frame to be processed, in units of prediction block being composed of plural pixels, which is obtained by dividing the frame, thereby generating predicted image data; and a decoding step of decoding the coded data corresponding to the target frame, in units of decoding block that is composed of a plurality of the prediction blocks, by using predicted image data corresponding to the decoding block. Therefore, a coded data string that has been coded with finer motion detection can be properly decoded, whereby an image of higher image quality can be reproduced from coded data that has been coded with higher coding efficiency.

According to a 17th aspect of the present invention, in the decoding method of the 16th aspect, the prediction step including steps of: generating predicted image data corresponding to each of plural kinds of prediction blocks having different configurations; selecting predicted image data corresponding to a prediction block having a predetermined configuration, in accordance with block identification information that indicates predicted image data of a prediction block having a configuration, which was selected from the predicted image data corresponding to the plural kinds of prediction blocks having different configurations at predictive coding of the image data; and generating predicted image data corresponding to the decoding block from the predicted image data of the selected prediction block. Therefore, image data which has been coded with higher precision motion detection corresponding to the motion of the image in a frame can be properly decoded, whereby an image of higher image quality can be reproduced from coded data which has been coded with higher coding efficiency.

According to an 18th aspect of the present invention, in the decoding method of the 16th aspect, the prediction step includes steps of: generating predicted image data corresponding to each of plural kinds of prediction blocks having different configurations; and combining the predicted image data corresponding to the plural kinds of prediction blocks having different configurations, in accordance with block arrangement information that indicates an arrangement pattern of the plural kinds of prediction blocks in the decoding block, thereby generating predicted image data corresponding to the decoding block. Therefore, image data which has been coded with higher precision motion detection corresponding to the configuration or motion of a moving image in a frame can be properly decoded, whereby an image of higher image quality can be reproduced from the coded data which has been coded with higher coding efficiency.

### BRIEF DESCRIPTION OF THE DRAWINGS

Fig. 1 is a block diagram for explaining an encoder 100a according to a first embodiment of the present invention.
Figs. 2(a) to 2(c) are schematic diagrams for explaining predictive coding by the encoder 100a according to the first embodiment, and show the relationships between a frame corresponding to an inputted image data and prediction error blocks.
Fig. 3 is a block diagram for explaining an encoder 100b according to a second embodiment of the present invention.
Figs. 4(a) to 4(c) are schematic diagrams for explaining predictive coding by the encoder 100b according to the second embodiment, and shows three examples of arrangement patterns for 4x4 pixel blocks and 2x8 pixel blocks that constitute an 8x9 pixel block.
Fig. 5 is a block diagram for explaining an encoder 100c according to a third embodiment of the present invention.
Fig. 6 is a block diagram for explaining an encoder 100d according to a fourth embodiment of the present invention.
Fig. 7 is a block diagram for explaining a storage device 100e according to a fifth embodiment of the present invention.
Fig. 8 is a block diagram for explaining a storage device 100f according to a sixth embodiment of the present invention.
Fig. 9 is a block diagram for explaining a decoder 100g according to a seventh embodiment of the present invention.
Fig. 10 is a block diagram for explaining a decoder 100h according to an eighth embodiment of the present invention.
Fig. 11 is a block diagram for explaining a decoder 100i according to a ninth embodiment of the present invention.
Fig. 12 is a block diagram for explaining a reproduction device 100j according to a tenth embodiment of the present invention.
Fig. 13 is a block diagram for explaining a reproduction device 100k according to an eleventh embodiment of the present invention.
Fig. 14 is a diagram for explaining a handy phone according to a twelfth embodiment of the present invention.
Figs. 15(a) and 15(b) are diagram for explaining d data storage medium that contains a program for implementing the device according to any of the above embodiments by a computer system, and Fig. 15(c) is a diagram for explaining the computer system.
Figs. 16(a) and 16(b) are schematic diagram for explaining a conventional MPEG coding method, and show frames which are subjected to inter-frame predictive coding.
Fig. 17 is a block diagram for explaining an encoder 700 according to the conventional MPEG coding method.
Fig. 18 is a schematic diagram for explaining predictive coding according to the conventional MPEG coding method, and shows a correspondence between a 16x16 pixel block as a unit for motion compensation and 8x8 pixel blocks as units for DCT transformation.
Fig. 19 is a block diagram for explaining a decoder 800 according to the conventional MPEG decoding method.

### DETAILED DESCRIPTION OF THE PREFERRED EMBODIMENTS

Hereinafter, embodiments of the present invention will be described.

### [Embodiment 1]

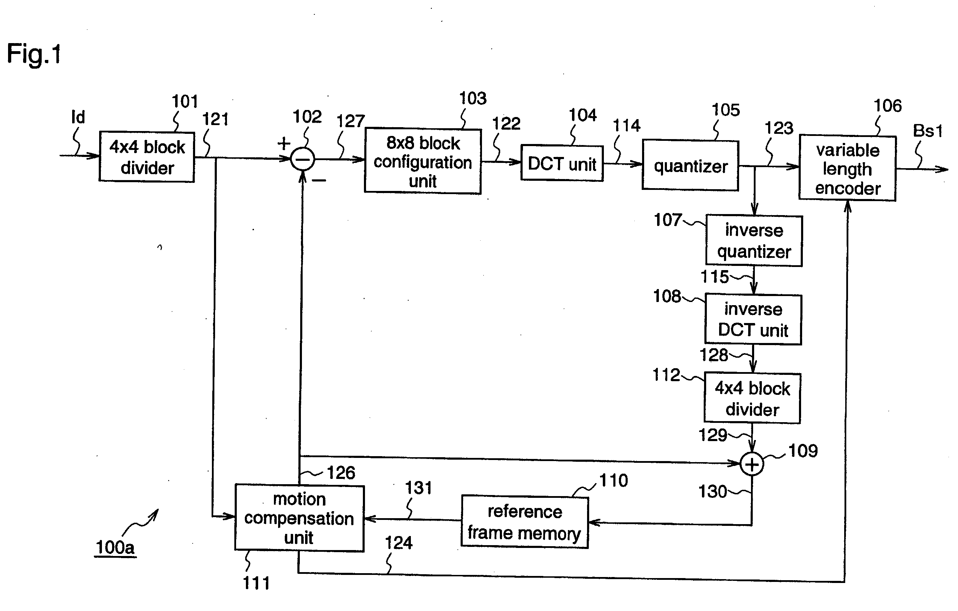

Fig. 1 is a block diagram for explaining an encoder according to a first embodiment of the present invention.

This encoder 100a according to the first embodiment employs for motion compensation a unit that is smaller than a data unit in which DCT Lransformation is performed.

To be more specific, the encoder 100a includes a first 4X4 block divider 101 that divides image data of each frame which is inputted as a video signal, into 4x4 pixel blocks, each composed of 4 pixels (horizontal) x 4 pixels (vertical), unlike the 16x16 block divider 701 in the conventional encoder 700 as shown in Fig. 17, and a motion compensation unit 111 that performs motion detection for each 4x4 pixel block to output a motion vector 124 corresponding to each 4x4 pixel block and predicted data corresponding to the 4x4 pixel block (hereinafter, referred to also as 4x4 prediction reference block data) 126, unlike the motion compensation unit 711 of the encoder 700.

The encoder 100a further includes a subtractcr 102 that carries out a process of subtracting the 4x4 prediction reference block data 126 from 4x4 pixel block data that is the output 121 from the 4x4 block divider 101, and outputs difference data corresponding to the 4x4 pixel block (hereinafter, referred to also as 4x4 prediction error block data) 127, and an 8x8 block configuration unit 103 that generates difference data corresponding to the 8x8 pixel block that is composed of four 4x4 pixel blocks (hereinafter, referred to also as 8x8 prediction error block data) 122, on the basis of the output 127 from the subtracter 102.

The encoder 100a further includes a DCT unit 104 that subjects the 8x8 prediction error block data 122 to DCT transformation, a quantizer 105 that subjects an output 114 from the DCT unit 104 to a quantization process in a predetermined quantization step, and a variable length encoder 106 that subjects an output 123 from the quantizer 105 to a variable length coding process and attaches a code corresponding to the motion vector 124 outputted from the motion compensation unit 111, to coded data that is obtained by the variable length coding process, thereby to output a coded data string Bs1.

The encoder 100a further includes an inverse quantizer 107 that subjects the output 123 from the quantizer 105 to an inverse quantization process, and an inverse DCT unit 108 that subjects an output 115 from the inverse quantizer 107 to inverse DCT transformation, thereby to generate decoded data 128 of the 8x8 prediction error block.

Further, the encoder 100a includes a second 4x4 block divider 112 that divides the decoded data 128 of the 8x8 prediction error block into four 4x4 prediction error blocks that partition the 8x8 prediction error block, and outputs decoded data 129 of the 4x4 prediction error block, unlike the 16x16 block divider 701 of the encoder 700 as shown in Fig. 17.

The encoder 100a further includes an adder 109 that adds the decoded data 129 of the 4x4 prediction error block and the 4x4 prediction reference block date 126, and outputs decoded data corresponding to the 4x4 pixel block (hereinafter, referred to also as 4x4 decoded block data) 130, and a reference frame memory 110 that stores the 4x4 decoded block data 130 as data of a reference frame that is to be employed at predictive coding for the next frame of the target frame.

Here, the DCT unit 104, the quantizer 105, the inverse quantizer 107, the inverse DCT unit 108, and the variable length encoder 106 of the encoder 100a according to the first embodiment are identical to the DCT unit 704, the quantizer 705, the inverse quantizer 707, the inverse DCT unit 708, and the variable length encoder 706 in the conventional encoder 700 in Fig. 17, respectively.

Next, its operation will be described.

When a video signal is inputted as image data Id to the encoder 100a of the first embodiment, the first 4x4 block divider 101 divides the image data Id corresponding to a frame as a target to be processed into 4x4 pixel blocks, and outputs the 4x4 pixel block data 121. The motion compensation unit 111 performs motion detection on the basis of the 4x4 pixel block data 121, with referring to image data of a reference frame that is stored in the reference frame memory 110, and outputs a motion vector 124 corresponding to the 4x4 pixel block to be processed, and prediction reference data corresponding to the 4x4 pixel block (4x4 prediction reference block data) 126. In this first embodiment, the motion detection in the motion compensation unit 111 is different from the motion detection in the motion compensation unit 711 of the conventional encoder 700 in that the motion detection is performed in units of 4x4 pixel block.

The subtracter 102 carries out a subtraction process of subtracting the 4x4 prediction reference block data 126 from the 4x4 pixel block data 121, and outputs difference data corresponding to the 4x4 pixel block, which is obtained by the subtraction process, (4x4 prediction error block data) 127. The subtraction process is a process for obtaining a difference between pixel levels of corresponding pixels of the 4x4 pixel block and the 4x4 prediction reference block, respectively.

When the 4x4 prediction error block data 127 is inputted to the 8x8 block configuration unit 103, the 8x8 prediction error block data 122 is generated from four pieces of the 4x4 prediction error block data 127.

Figs. 2(a) to 2(c) are diagrams showing the relationship between a frame and respective blocks.

Here, the size of a frame F, i.e., the numbers of horizontal pixels and vertical pixels of the frame F are 32, respectively.

For example, as shown in Fig. 2(a), data of four 4x4 pixel blocks BL4a to BL4d which are obtained by the first 4x4 block divider 101 correspond to data of one 8x8 pixel block BL8 in the frame F. Further, the 4x4 pixel blocks BL4a to BL4d correspond to 4x4 prediction error blocks BLp4a to BLp4d, respectively (Fig. 2(b)). These four 4x4 prediction error blocks BLp4a to BLp4d constitute one 8x8 prediction error block BLp8.

When the 8x8 prediction error block data 122 is inputted to the DCT unit 104, the DCT unit 104 subjects the 8x8 prediction error block data 122 to two-dimensional discrete cosine transformation (DCT), and outputs DCT coefficient data 114 that is composed of plural DCT coefficients corresponding to the 8x8 prediction error block. The quantizer 105 quantizes the respective DCT coefficients of the 8x8 prediction error block on the basis of the DCT coefficient data 114 in a predetermined quantization step, and outputs quantized coefficient data 123 that is composed of plural quantized coefficients corresponding to the 8x8 prediction error block. The plural quantized coefficients corresponding to the 8x8 prediction error block has a two-dimensional array.

The variable length encoder 106 scans the plural quantized coefficients 123 in the two-dimensional array, corresponding to the 8x8 prediction error block, on the basis of the quantized coefficient data 123, to be transformed into quantized coefficients in a one-dimensional array, and carries out a variable length coding process for encoding the quantized coefficients in the one-dimensional array which are obtained by the scanning by using a variable length code. At this time, the variable length encoder 106 also performs coding of the motion vector 124 that is obtained by the motion compensation unit 111. Then, the variable length encoder 106 outputs a coded data string Bsl that includes coded data corresponding to the quantized coefficients and a code corresponding to the motion vector 124.

Further, when the quantized coefficient data 123 of the 8x8 prediction error block is inputted to the inverse quantizer 107, the inverse quantizer 107 carries out an inverse quantization process for the quantized coefficient data 123 by using the quantization step that has been employed in the quantizer 105, to reconstitute DCT coefficient data 115 of the 8x8 prediction error block, which is composed of plural DCT coefficients. When the DCT coefficient data 115 of the 8x8 prediction error block is inputted to the inverse DCT unit 108, the inverse DCT unit 108 subjects the DCT coefficient data 115 of the 8x8 prediction error block to the two-dimensional inverse DCT transformation, and outputs 8x8 prediction error block decoded data 128.

When the 8x8 prediction error block decoded data 128 is inputted to the second 4x4 block divider 112, the second 4x4 block divider 112 divides the 8x8 prediction error block decoded data 128 correspondingly to the 4x4 pixel blocks which are obtained by the division of the frame in the first 4x4 block divider 101, and outputs decoded data 129 corresponding to the 4x4 prediction error block.

The adder 109 adds the 4x4 prediction error block data 129 and the 4x4 prediction reference block data 126, and outputs 4x4 pixel block decoded data 130. In the addition process, the sum of pixel levels of corresponding pixels between the prediction error block and the prediction reference block is obtained, pixel by pixel.

Then, the 4x4 pixel block decoded data 130 outputted from the adder 109 is stored in the reference frame memory 110 as data of a reference frame that is to be employed at predictive coding for the next frame of the target frame.

According to this first embodiment, the motion compensation is carried out in units of block that is composed of 4 x 4 pixels, and the DCT transformation is performed in units of block that is composed of 8x8 pixels. Therefore, fine motion detection can be performed, as well as the reduction of the compression efficiency in the DCT transformation, resulting from the decrease in size of the block, can be avoided. Particularly when the size of an image corresponding to inputted image data is smaller, the prediction efficiency is improved by increasing the precision of the motion detection, whereby image data can be more efficiently compressed with a smaller amount of bits.

In this first embodiment, the motion compensation is performed in units of block that is composed of 4 x 4 pixels, and the DCT transformation is performed in units of block that is composed of 8x8 pixels. However, the units in which the motion compensation and the DCT transformation are performed arc not restricted to those described in the first embodiment. The motion compensation and the DCT transformation can be performed in any units so long as the block as a unit to be subjected to the DCT transformation is obtained by combining plural blocks as units to be subjected to the motion compensation.

For example, it is possible that the motion compensation is performed in units of block that is composed of 2x8 pixels (2x8 pixel block), while the DCT transformation is carried out in units of block that is composed of 8x8 pixels (8x8 pixel block), which is obtained by combining four of the 2x8 pixel blocks.

In addition, in this first embodiment, the DCT transformation is performed in units corresponding to four units to be subjected to the motion compensation. However, the DCT transformation can be performed in any units each corresponding to plural units for the motion compensation.

Further, in this first embodiment, the DCT transformation is performed as a frequency transformation process for image data. However, the frequency transformation process for the image data is not restricted to this, and any transformation such as Hadamard transformation may be performed.

In this first embodiment, the quantization of the DCT coefficients is a process in which plural DCT coefficients of an 8x8 prediction error block, which is the output 114 from the DCT unit 104 are quantized for each DCT coefficient. However, the quantization of the DCT coefficients may be performed for example according to vector quantization.

To be more specific, the vector quantization of DCT coefficients is a process in which plural DCT coefficients corresponding to one 8x8 prediction error block are indicates by one vector having values of these DCT coefficients as components, and the vector corresponding to the 8x8 prediction error block is approximated by one of plural vectors having components whose values have been previously decided.

This vector quantization is also carried out in units of 8x8 prediction error block that is composed of four 4x4 prediction error blocks, as in the quantization according to the first embodiment.

"The Series of Introduction to High Technology" (published by Ohmsha,Ltd.) (Image information compression, edited by ITE, supervised by Hiroshi Harashima, August 25, 1991, pp. 116-138, Chapter 6, Approach to vector quantization) describes a specific example of the vector quantization.

### [Embodiment 2]

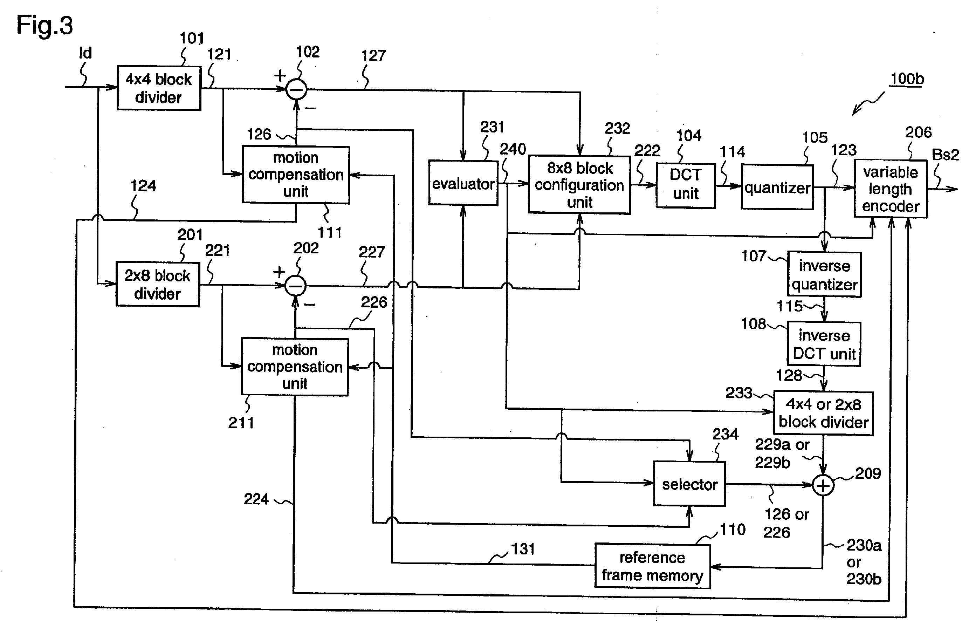

Fig. 3 is a block diagram for explaining an encoder according to a second embodiment of the present invention.

This encoder 100b according to the second embodiment performs, as in the first embodiment, motion compensation at predictive coding for image data that is inputted as a video signal with employing a unit that is smaller than a unit of data to be subjected to DCT transformation. This encoder 100b according to the second embodiment is different from the encoder 100a according to the tirst embodiment in that one of two motion compensation modes is adaptively selected at the predictive coding.

To be more specific, this encoder 100b according to the second embodiment includes, in addition to the first 4x4 block divider 101 of the first embodiment that divides inputted image data of each frame into data corresponding to 4x4 pixel blocks, a 2x8 block divider 201 that divides the inputted image data of each frame into data corresponding to 2x8 pixel blocks, each being composed of 2 pixels (horizontal) and 8 pixels (vertical).

The encoder 100b includes, in addition to the motion compensation unit 111 that performs the motion detection with taking data 121 corresponding to the 4x4 pixel block as a unit and outputs the motion vector 124 for the 4x4 pixel block and predicted data corresponding to the 4x4 pixel block (4x4 prediction reference block data) 126, a motion compensation unit 211 that performs motion detection with taking data corresponding to the 2x8 pixel block as a unit, and outputs a motion vector 224 for the 2x8 pixel block and prediction reference data corresponding to the 2x8 pixel block (2x8 prediction reference block data) 226.

The encoder 100b includes, in addition to the subtracter 102 of the first embodiment that carries out the process of subtracting the 4x4 prediction reference block data 126 from 4x4 pixel block data that is the output 121 from the 4x4 block divider 101 and outputs difference data of the 4x4 pixel block (prediction error block data) 127, a subtracter 202 that carries out a process of subjecting the 2x8 prediction reference block data 226 from the 2x8 pixel block data that is outputted from the 2x8 block divider 201 and outputs difference data of the 2x8 pixel block (prediction error block data) 227.

The encoder 100b includes an evaluator 231 thaL selects one of two motion compensation modes (a motion compensation mode in units of 4x4 pixel block and a motion compensation mode in units of 2x8 pixel block) on the basis of the output (4x4 prediction error block data) 127 from the subtracter 102 and the output (2x8 prediction error block data) 227 from the subtracter 202, and outputs a motion compensation mode identification signal (hereinafter, referred to also as an evaluation signal) 240 for identifying the mode.

More specifically, the selection of the motion compensation mode in the evaluator 231 is performed with taking the coding efficiency as a scale. For example, a distribution value of pixel levels in the 4x4 prediction error block and a distribution value of pixel levels in the 2x8 prediction error block are compared with each other, and a mode that employs a prediction error block having a smaller distribution value is selected.

Here, the distribution value of pixel levels in the prediction error block is employed as the scale for selecting the motion compensation mode. However, the scale for selecting the motion compensation mode is not restricted to the distribution value. Any scale may be employed so long as the scale corresponds to the coding efficiency (i.e., a scale indicating the quality of the image that obtained with the same amount of codes). A higher coding efficiency indicates that a higher quality of a reproduced image can be obtained with a smaller amount of codes.

Further, as the scale that indicates the coding efficiency, the sum of absolute values of pixel levels in the prediction error block, or distribution of transformation coefficients which are obtained by a transformation process such as DCT for image data may be employed. For example, plural DCT coefficients (frequency components) which are obtained by the DCT transformation for image data indicate that the coding efficiency is higher when the degree of concentration onto the lower frequency end is higher.

Further, as the scale for selecting the motion compensation mode, the amount of codes which are generated when quantized coefficients obtained by quantizing DCT coefficients are variable-length-coded can he employed. This utilizes the fact that the coding efficiency is higher in a motion compensation mode having a smaller amount of codes even when the quantization of the DCT coefficients is performed in the same quantization step.

Further, as the scale for selecting the motion compensation mode, the entropy of the prediction error block, i.e., variation of the pixel levels may be employed.

Further, the value of the motion vector can be employed as the scale for selecting the motion compensation mode. This is because the coding at a higher coding efficiency can be performed when the motion vector of the prediction error block is smaller.

Further, the metion compensation mode can be decided according to the values of motion vectors of 4x4 pixel blocks that are situated around the 4x4 pixel block as the target to be processed in the frame. Since plural blocks which are situated within an object having a motion move almost in the same manner, motion vectors of the respective blocks often have close values.

Therefore, when a block to be processed (target block) have a motion vector having a value that is close to values of motion vectors of blocks (peripheral blocks) which are situated around the target block, it is considered that the motion detection for the block is carried out with higher precision, whereby it is judged that the coding efficiency is increased. further, when a difference vector between the motion vector of the target block and the motion vector of the peripheral block is coded as the motion vector of the target block, it is considered that a motion compensation mode having a smaller difference vector value has a higher coding efficiency.

Further, as the scale for the coding efficiency, the above-mentioned plural scales may be combined.

The encoder 100b according to the second embodiment further includes an 8x8 block configuration unit 232 that generates 8x8 prediction error block data 222 on the basis of the output 127 from the subtracter 102 and the output 227 from the subtracter 202, in accordance with the evaluation signal 240 from the evaluator 231.

The encoder 100b further includes a DCT unit 104 that subjects the 6x8 prediction error block data 222 to DCT transformation, a quantizer 105 that subjects an output 114 from the DCT unit 104 to a quantization process in a predetermined quantization step, and a variable length encoder 206 that carries out the variable Length coding process for an output 123 from the quantizer 105, and attaches a code corresponding to the motion vector 124 or 224 outputted from the motion compensation unit 111 or 211 and a code corresponding to the evaluation signal 240 from the evaluator 231 to coded data that is obtained by the variable length coding process, thereby to output a coded data string Bs2.

The encoder 100b further includes an inverse quantizer 107 that subjects the output 123 from the quantizer 105 to an inverse quantization process, and an inverse DCT unit 108 that subjects an output 115 from the inverse quantizer 107 to inverse DCT transformation, and outputs decoded data 128 of the 8x8 prediction error block.

Further, the encoder 100b includes a block divider 233 that divides the decoded data 128 of the 8x8 prediction error block into 4x4 prediction error blocks or 2x8 prediction error blocks, in accordance with the evaluation signal 240 from the evaluator 231, and outputs decoded data 229a of the 4x4 prediction error block or decoded data 229a of the 2x8 prediction error block.

The encoder 100b further includes a selector 234 that selects out of the output 126 from the motion compensation unit 111 and the output 226 from the motion compensation unit 211 in accordance with the evaluation signal 240 from the evaluator 231, an adder 209 that adds the output 126 or 226 from the selector 234 and the output 229a or 229b from the block divider 233, and a reference frame memory 110 that stores decoded data corresponding to the 4x4 pixel block (hereinafter, referred to also as 4x4 decoded block data) 230a or decoded data corresponding to the 2x8 pixel block (hereinafter, referred to also as 2x8 decoded block data) 230b, which is outputted from the adder 209, as data of a reference frame that is to be employed at predictive coding for the next frame of the target frame.

Here, the 4x4 block divider 101, the subtracter 102, the motion compensation unit 111, the DCT unit 104, the quantizer 105, the inverse quantizer 107, the inverse DCT unit 108, and the variable length encoder 106 of the encoder 100b according to the second embodiment are identical to those in the first embodiment as shown in Fig. 1, respectively.

Next, its operation will be described.

When a video signal is inputted as image data Id to the encoder 100b according to the second embodiment, the 4x4 block divider 101 divides the inputted frame image data Id into 4x4 pixel blocks, and outputs data 121 corresponding to the 4x4 pixel blocks. The 2x8 block divider 201 divides the inputted frame image data Id into 2x8 pixel blocks, and outputs data 221 corresponding to the 2x8 pixel blocks.

The motion compensation unit 111 performs motion detection on the basis of the 4x4 pixel block data 121, with referring to image data of a reference frame that is stored in the reference frame memory 110, and outputs a motion vector 124 corresponding to the 4x4 pixel block to be processed and prediction reference data corresponding to the 4x4 pixel block (4x4 prediction reference block data) 126. The motion compensation unit 211 perform, motion detection on the basis of the 2x8 pixel block data 221, with referring to image data of a reference frame that is stored in the reference frame memory 110, and outputs a motion vector 224 corresponding to the 2x8 pixel block to be processed and prediction reference data corresponding to the 2x8 pixel block (2x8 prediction reference block data) 226.

The subtracter 102 carries out a subtraction process of subtracting the 4x4 prediction reference block data 126 from the 4x4 pixel block data 121, and outputs 4x4 pixel block difference data which is obtained by the subtraction process (4x4 prediction error block data) 127. The subtracter 202 carries out a subtraction process of subtracting the 2x8 prediction reference block data 226 from the 2x8 pixel block data 221, and outputs 2x8 pixel block difference data which is obtained by the subtraction process (2x8 prediction error block data) 227.

When the 4x4 prediction error block data 127 and the 2x8 prediction error block data 227 are inputted to the evaluator 231, the evaluator 231 selects one of two motion compensation modes, i.e., the motion compensation mode in units of 4x4 pixel block and the motion compensation mode in units of 2x8 pixel block on the basis of the data of these blocks, and outputs the motion compensation mode identification signal 240 for identifying the selected mode. Here, the motion compensation mode is selected taking the coding efficiency as the scale. For example, the distribution value of the 4x4 prediction error block data 127 and the distribution value of the 2x8 prediction error block data 227 are compared with each other, and the motion compensation mode corresponding to the block having a smaller distribution value is selected.

Here, as the scale for selecting one of the two motion compensation modes, the distribution value of the prediction error block is employed. However, the scale for selecting one of the two motion compensation modes is not restricted to that shown in the second embodiment. For example, as described in the first embodiment, any scale corresponding to the coding efficiency may be employed.

The 8x8 block configuration unit 232 generates 8x8 pixel block difference data (8x8 prediction error block data) 222 by using the 4x4 prediction error block data 127 or the 2x8 prediction error block data 227, in accordance with the motion compensation mode identification signal 240.

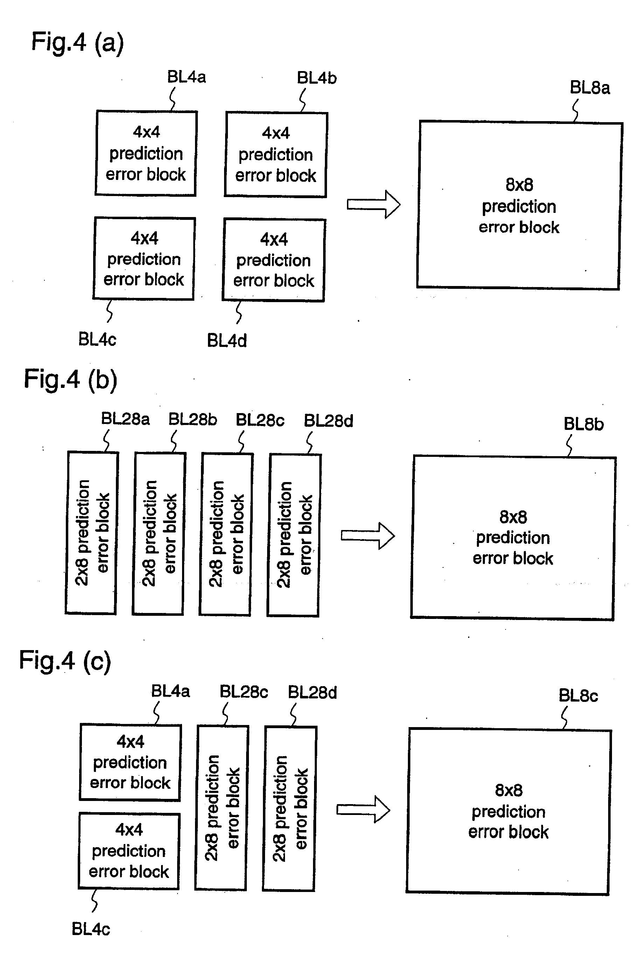

Figs. 4(a) to 4(c) show three examples of configuration of an 8x8 prediction error block.

For example, Fig. 4 (a) shows a case where one 8x8 prediction error block BL8a is composed of four 4x4 prediction error blocks BL4a to BL4d as in the first embodiment.

Fig. 4(b) shows a case where one 8x8 prediction error block BL8b is composed of four 2x8 prediction error blocks BL28a to BL28d.

Fig. 4(c) shows a case where one 8x8 prediction error block BL8c is composed of two 4x4 prediction error blocks BL4a and BL4b and two 2x8 prediction error blocks BL28c and BL28d.

As described above, the 8x8 prediction error block data 222 is constituted by prediction error data which are obtained by the combination of plural motion compensation modes.

When the 8x8 prediction error block data 222 is inputted to the DCT unit 104, the DCT unit 104 subjects the 8x8 prediction error block data 222 to two-dimensional discrete cosine transformation (DCT), and outputs DCT coefficient data 114 that is composed of plural DCT coefficients corresponding to the 8x8 prediction error block. The quantizer 105 quantizes the respective DCT coefficients of the 8x8 prediction error block in a predetermined quantization step, and outputs quantized coefficient data 123 that is composed of plural quantized coefficients corresponding to the 8x8 prediction error block. The plural quantized coefficients corresponding to the 8x8 prediction error block has two-dimensional array.

The variable length encoder 206 scans the plural quantized coefficients in the two-dimensional array corresponding to the 8x8 prediction error block, on the basis of the quantized coefficient data 123, to be transformed into quantized coefficients in a one-dimensional array, and carries out a variable length coding process of encoding the quantized coefficients in the one-dimensional array which are obtained by the scanning, by using a variable length code. The variable length encoder 106 attaches a code corresponding to the motion vector 124 that is obtained by the motion compensation unit 111 or a code corresponding to the motion vector 224 that is obtained by the motion compensation unit 211, and a code corresponding to the evaluation signal 240 that indicates the selected motion compensation mode, to coded data that is obtained by the variable length coding process for the quantized coefficients, and outputs a coded data string Bs2.

Here, the code corresponding to the evaluation signal 240 may be located at the head of a code string of each prediction error block, or at the head of a code string corresponding to a frame. The location of the signal 240 in the coded string data is not restricted.

Further, when the quantized coefficient, data 123 of the 8x8 prediction error block is inputted to the inverse quantizer 107, the inverse quantizer 107 carries out an inverse quantization process for the quantized coefficient data 123 by using the quantization step that has been employed in the quantizer 105, to reconstitute DCT coefficient data 115 of the 8x8 prediction error block, which is composed of plural DCT coefficients. When the DCT coefficient data 115 of the 8x8 prediction error block is inputted to the inverse DCT unit 108, the inverse DCT unit 108 subjects the DCT coefficient data 115 of the 8x8 prediction error block to the two-dimensional inverse DCT transformation, and outputs 8x8 prediction error block decoded data 128.

When the 8x8 prediction error block decoded data 128 is inputted to the block divider 233, the block divider 233 divides the 8x8 prediction error block decoded data 128 into 4x4 prediction error block decoded data 229a or 2x8 prediction error block decoded data 229b, in accordance with the motion compensation mode identification signal 240. This block division corresponds to an inverse of the 8x8 block generation process that has been carried out in the 8x8 block configuration unit 232. The decoded data 229a or 229b of the divided prediction error block is inputted to the adder 209.

The selector 234 selects one of the 4x4 prediction reference block data 126 that is obtained by the motion compensation unit 111 in units of 4x4 pixels and the 2x8 prediction reference block data 226 that is obtained by the motion compensation unit 211 in units of 2x8 pixels, in accordance with the motion compensation mode identification signal 240, and outputs the selected data. That is, when the decoded data outputted from the block divider 233 is 4x4 pixel block decoded data, the selector selects the 4x4 prediction reference block data 126, while when the decoded data outputted from the block divider 233 is 2x8 pixel block decoded data, the selector selects the 2x8 prediction reference block data 226.

The adder 209 performs addition of the 4x4 prediction reference block data 126 outputted from the selector 234 and the 4x4 prediction error block decoded data 229a, or addition of the 2x8 prediction reference block data 226 outputted from the selector 234 and the 2x8 prediction error block decoded data 229b, and outputs 4x4 pixel block data 230a or 2x8 pixel block data 230b.

The 4x4 pixel block decoded data 230a or 2x8 pixel block decoded data 230b outputted from the adder 223 is inputted to the reference frame memory 110, and stored as data of a prediction reference frame that is to be used at predictive coding for the next frame of the target frame.

According to this second embodiment, a region as a unit to be subjected to the motion compensation is adaptively changed to a predetermined one selected from the 2x8 pixel block and the 4x4 pixel block, whereby finer motion detection can be performed. The DCT transformation is performed in units of 8x8 pixel block, whereby a higher coding efficiency is simultaneously kept.

The motion compensation mode can be decided in units of 8x8 pixel block, or in units of frame. The unit in which the motion compensation mode is decided is not restricted.

The motion compensation mode may be decided in units which are smaller than the 8x8 pixel block.

An example in which the motion compensation mode is decided in units of 4x8 pixel block will be specifically described with reference to Fig. 4(c). When the motion compensation mode is decided taking two 4x4 prediction error blocks BL4a and BL4c as a unit and the motion compensation mode is decided taking two 2x8 prediction error block BL28c and BL28d as a unit, the motion compensation mode can be decided in units of 4x8 pixel block.

Further, it is possible to perform the motion compensation by using plural kinds of blocks havinq different shapes as units, and perform the DCT transformation by using a larger block that is obtained by combining the various blocks in accordance with a predetermined arrangement pattern as a unit. In this case, as the arrangement pattern of blocks (smaller block) as units for the motion compensation in a larger block as the unit for the DCT transformation, an arrangement pattern that has the highest coding efficiency is selected according to coding efficiencies corresponding to the respective arrangement patterns, which have been previously obtained. In this case, the variable length encoder 206 is required to output a code that specifies the selected block arrangement pattern. The code that specifies the selected arrangement pattern may be located at the head of a code string corresponding to a block, or at the head of a code string corresponding to a frame. The location of the code that specifies the arrangement pattern in the code string is not restricted.

As described above, when plural kinds of smaller blocks having different shapes are employed as units for the motion compensation, and one of plural arrangement patterns of the smaller blocks as the units for the motion compensation in a larger block that is the unit for the DCT transformation is selected, finer motion detection can be performed, thereby increasing the coding efficiency.

The arrangement patterns for 4x4 pixel blocks or 2x8 pixel blocks in the 8x8 prediction error block are not restricted to those as shown in Figs. 4(a) to 4(c).

Further, neither the shape and size of the smaller block that is to be subjected to the motion compensation or the shape and size of the larger block that is to be subjected to the DCT transformation is restricted to those described in the second embodiment. The blocks may have any shapes and sizes as long as the DCT coding process is carried out taking as a unit a larger block that is composed of plural smaller blocks as the units for the motion compensation.

Further, in this second embodiment, the DCT transformation is performed taking a block (larger block) that is composed of four units for the motion compensation (smaller blocks) as a unit. However, the number of smaller blocks as units for the motion compensation, which constitute the larger block as a unit for the DCT transformation is not restricted to one described in the second embodiment, and any number of smaller blocks may be employed as long as plural smaller blocks constitute the larger block.

Further, in the second embodiment, the DCT transformation is performed as the frequency transformation process, while the Hadamard transformation or the like may he performed as the frequency transformation process.

In this second embodiment, the quantization of the DCT coefficients is a process in which plural DCT coefficients of a 8x8 prediction error block, which is the output 114 from the DCT unit 104 are quantized for each DCT coefficient. However, the quantization of the DCT coefficients can be vector quantization as described in the first embodiment.

Further, the encoder of the first or second embodiment can include, in addition to the construction (the first encoding unit) as shown in Fig. 1 or 3, an encoding unit (second encoding unit) according to the conventional MPEC coding method, to select one of the first and second encoding units according to the image size of the image data as a target to be proceed.

For example, when the unit for the motion compensation is smaller when the image size is larger, the motion detection processing is increased. Therefore, the encoding method according to the first or second embodiment, which makes the unit for the motion compensation smaller in size, has greater effects particularly when the image size is small. Accordingly, when the image size is larger than a predetermined size, the coding process according to the conventional MPEG coding method is carried out. The coding process as described in any of these embodiments is employed in other cases, whereby the amount of data processed at the coding is held at a proper level while increasing the coding efficiency.

While the size corresponding to approximately 352 x 286 pixels is assumed as the reference image size for switching the coding process, other sizes can be employed.

### [Embodiment 3]

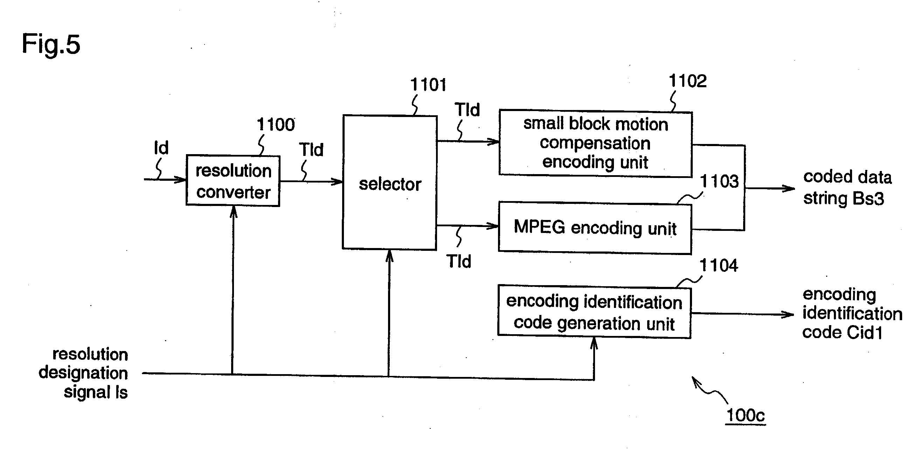

Fig. 5 is a block diagram illustrating an encoder according to a third embodiment of the present invention.

An encoder 100c according to the third embodiment includes a first encoding unit (hereinafter, referred to also as a small block motion compensation encoding unit) 1102 that performs predictive coding in which a data unit to be subjected to motion compensation for image data Id that is inputted as a video signal is smaller than a data unit that is to be subjected to frequency transformation for the image data Id; and a second encoding unit (hereinafter, referred to also as an MPEG encoding unit) 1103 that performs predictive coding in which a data unit to be subjected to motion compensation for inputted image data Id is larger than a data unit that is to be subjected to frequency transformation for the image data Id, and selects one of the coding in the first encoding unit 1102 and the coding in the second encoding unit 1103 in accordance with a resolution designation signal Is that is generated at the request from the user or the like.

Here, the first encoding unit 1102 is constituted by the encoder 100a according to the first embodiment. The second encoding unit (MPEG encoding unit) 1103 is constituted by the encoder 700 that carries out a coding process according to the conventional MPEG coding method as shown in Fig. 17. The first encoding unit 1102 may be constituted by the encoder 100b according to the second embodiment.

The encoder 100c further includes a resolution converter 1100 that subjects the inputted image data Id to resolution conversion so as to have an image size designated by the resolution designation signal Is and outputs image data TId having a converted image size, a selector 1101 that supplies the image data TId having the converted image size to one of the small block motion compensation encoding unit 1102 and the MPEG encoding unit 1103 in accordance with the resolution designation signal, and an encoding identification code generation unit 1104 that receives the resolution designation signal Is, and outputs a code (encoding identification code) Cid that identifies which of the first encoding unit 1102 and the second encoding unit 1103 is selected by the selector 1101 in accordance with the signal Is. Here, the encoding identification code Cid may be multiplexed with a coded data string Bs3 that is outputted from the selected encoding unit.

Here, the resolution converter 1100 for performing resolution conversion to reduce the image size of the image data Id can be implemented by a low-pass filter that receives the image data Id and a pixel thinning unit that performs a pixel thinning process for an output from the filter. Further, the resolution converter 1100 for performing resolution conversion to increase the image size of the image data Id can be implemented by an interpolation filter that receives the image data and a pixel interpolation unit that performs a pixel interpolation process for an output from the filter. To be more specific, the selector 1101 supplies the image data TId having the converted image size to the small block motion compensation encoding unit 1102 when the image size is smaller than a predetermined size, and supplies the image data TId to the MPEG encoding unit 1103 in other cases. The image size as a criterion for changing the encoding unit can assume for example 352 x 286 pixels, but it is not restricted to this size.

Next, its operation will be described.

When the image data Id is inputted to the encoder 100c according to the third embodiment, the resolution converter 1100 subjects the image data Id to the resolution conversion process so that the image size of the image data has an image size designated by the resolution designation signal is that is generated at the request from the user or the like, and outputs resolution-converted image data TId.

The selector 1101 supplies the resolution-converted image data TId to one of the small block motion compensation encoding unit 1102 and the MPEG encoding unit 1103 in accordance with the resolution designation signal Is. More specifically, when the image size designated by the resolution designation signal Is is larger than an image size as a criterion for switching the encoding unit (for example, 352 x 286 pixels), the resolution-converted image data TId is supplied to the MPEG encoding unit 1103. On the other hand, when the image size designated by the resolution designation signal Is is equal to or smaller than the image size as the criterion tor switching the encoding unit (for example, 352 x 286 pixels) , the resolution-converted image data TId is supplied to the small block motion compensation encoding unit 1102.

Then, when the image data TId is inputted to the small block motion compensation encoding unit 1102, the encoding unit 1102 carries out a predictive coding process for the image data TId as in the encoder 100d according to the first embodiment, and outputs a coded data string Bs3. When the image data TId is inputted to the MPEG encoding unit 1103, the encoding unit 1103 carries out a predictive coding process for the image data TId as in the conventional encoder 700 shown in Fig. 17, and outputs a coded data string Bs3.

At this time, the encoding identification code generation unit 1104 outputs a code (encoding identification code) Cidl for identifying which of the first and second encoding units 1102 and 1103 is selected by the selector 1101 in accordance with the resolution designation signal Is.

As described above, the encoder according to the third embodiment includes the first encoding unit 1102 that performs predictive coding in which a unit to be subjected to the motion compensation for inputted image data Id is smaller than a unit that is to be subjected to the frequency transformation for the imaqe data Id; and the second encoding unit 1103 that performs predictive coding in which a unit to be subjected to the motion compensation for inputted image data Id is larger than a unit that is to be subjected to the frequency transformation for the image data Id, and selects one of the encoders adaptively to the image size. Therefore, the amount of data processed at the predictive coding is kept at an appropriate level, while increasing the coding efficiency.

The encoder 100c further includes the encoding identification code generation unit 1104 that outputs a code (encoding identification code) Cid for identifying which of the first encoding unit 1102 and the second encoding unit 1103 encodes the image data. Therefore, on the decoding end, the encoding method for a coded data string can be identified in accordance with the encoding identification code, whereby an appropriate decoding method can be selected at the decoding.

In this third embodiment, the encoder switches the encoding process according to the image size, while the switching of the encoding process in the third embodiment may be performed according to the coding bit rate.

For example, it is possible to provide an encoder according to the conventional MPEG coding method and the encoder according to any of the first and second embodiments, and select one of these encoders to carry out the coding of inputted image data according to the coding bit rate. When the coding bit rate is reduced, the prediction efficiency at the inter-frame prediction coding contributes more to the increase in the coding efficiency. Therefore, it is possible that predictive coding of image data is performed by any of the encoders according to the first and second embodiments when the coding rate is smaller than a reference rate, and otherwise the predictive coding of the image data is performed by the encoder according to the conventional MPEG coding method. In this case, a reference value of the coding bit rate for switching the encoder can be set at approximately 1 Mbps, but this is not restricted to this value.

### [Embodiment 4]

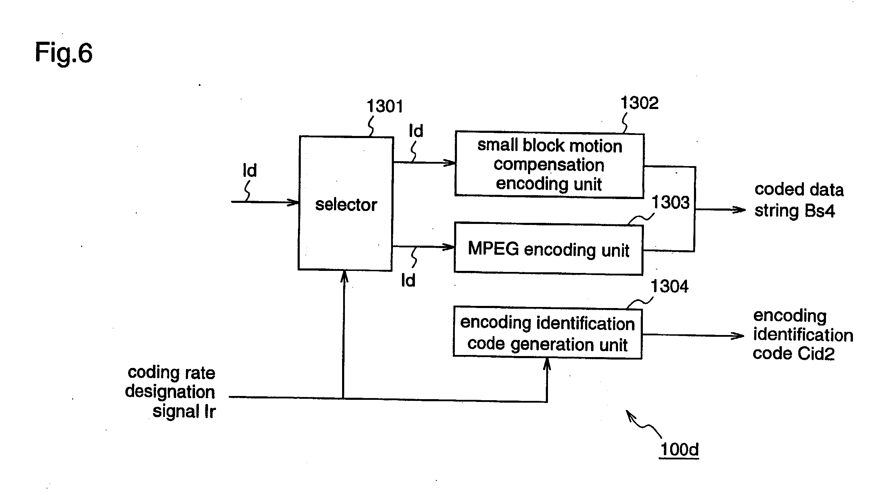

Fig. 6 is a block diagram illustrating an encoder according to a fourth embodiment of the present invention.

An encoder 100d According to the fourth embodiment switches between a predictive coding process in which a data unit to be subjected to motion compensation is smaller than a data unit that is to be subjected to DOT transformation, and a predictive coding process in which a data unit for motion compensation is larger than a data unit for DCT transformation, in accordance with a coding rate designation signal that is generated at the request from the user or the like.

To be more specific, this encoder 100d includes a first encoding unit (small block motion compensation encoding unit) 1302 that performs a predictive coding process in which a data unit to be subjected to motion compensation for inputted image data Id is smaller than a data unit that is to be subjected to frequency transformation for the image data Id; and a second encoding unit (MPEG encoding unit) 1303 that performs a predictive coding process in which a data unit to be subjected to motion compensation for inputted image data Id is larger than a data unit to be subjected to frequency transformation for the image data ID, and switches between the coding by the first encoding unit 1302 and the coding by the second encoding unit 1303 in accordance with the coding rate designation signal Ir that is generated at the request from the user or the like. Here, the first encoding unit 1302 is constituted by the encoder 100a according to the first embodiment. The MPEG encoding unit 1303 is constituted by the encoder 700 shown in Fig. 17, which performs coding according to the conventional MPEG coding method. The first encoding unit 1302 may be constituted by the encoder 100b according to the second embodiment. Further, the respective encoding units perform the coding at a coding rate in accordance with the coding rate designation signal Ir.

The encoder 100d further includes a selector 1301 that supplies the image data TId whose image size have been converted to one of the small block motion compensation encoding unit 1302 and the MPEG encoding unit 1303 in accordance with the coding rate designation signal Ir, and an encoding identification code generation unit 1304 that outputs a code (encoding identification code) Cid2 for identifying which of the first and second encoding units is selected by the selector 1301 in accordance with the coding rate designation signal Ir. Here., the encoding identification code Cid2 may be multiplexed with a coded data string Bs3 that is outputted from the respective encoding unit.

Next, its operation will be described.

When image data Id is inputted as a video signal to the encoder 100d according to the fourth embodiment, the selector 1301 supplies the image data Id to one of the small block motion compensation encoding unit 1302 and the MPEG encoding unit 1303 in accordance with the coding rate designation signal Ir. More specifically, when the rate designated by the coding rate designation signal Ir is larger than a rate as a reference for switching the encoding unit (for example, 1Mbps), the image data Id is supplied to the MPEG encoding unit 1103. On the other hand, when the rate designated by the coding rate designation signal Is is equal to or smaller than the reference rate for switching the encoding unit (for example, 1Mbps), the image data Id is supplied to the small block motion compensation encoding unit 1302.

Then, when the image data Id is inputted, the small block motion compensation encoding unit 1302 carries out the predictive coding process for the image data as in the encoder 100a according to the tirst embodiment, at a rate designated by the coding rate designation signal Ir, and outputs a coded data string Bs4. When the image data Id is inputted to the MPEG encoding unit 1303, the encoding unit 1303 carries out the predictive coding process for the image data as in the conventional encoder 700 shown in Fig. 17, at a rate designated by the coding rate designation signal Ir, and outputs a coded data string Bs4.

At this time, the encoding identification code generation unit 1304 outputs a code (encoding identification code) Cid2 for identifying which of the first and second encoding units 1302 and 1303 is selected by the selector 1301 in accordance with the coding rate designation signal Ir.

As described above, the encoder according to the fourth embodiment includes the first encoding unit 1302 that carries out the predictive coding process in which a unit to he subjected to the motion compensation for inputted image data Id is smaller than a unit that is to be subjected to the frequency transformation for the image data Id; and the second encoding unit 1303 that carries out the predictive ending process in which a data unit to be subjected to the motion compensation for inputted image data Id is larger than a unit that is to be subjected to the frequency transformation for the image data ld,and selects an encoding unit that is suited for the coding rate. Therefore, the amount of data processed at the predictive coding can be maintained at an appropriate level, while the coding efficiency is increased.

The encoder 100d further includes the encoding identification code generation unit 1304 that outputs the code (encoding identification code) Cid2 for identifying which of the first encoding unit 1302 and the second encoding unit 1303 encodes the image data Id. Therefore, on the decoding end, the encoding method for a coded data string can he identified in accordance with the encoding identification code, whereby an appropriate decoding method can be selected at the decoding.

In the third or fourth embodiment, the encoder switches the encoding unit that encodes image data, according to the resolution of the image data or the coding rate for the image data. However, the switching of the encoding unit may be performed according to output systems of coded data strings. For example, as the coded data string output systems, there are a recording system that records coded data strings in a recording medium, a transmission system that transmits coded data strings to a transmission line, and the like. Further, the number of the recording systems or transmission systems that output the coded data is not restricted to one. The coded data strings may be outputted to plural kinds of recording systems or plural kinds of transmission systems.

For example, as for DVD devices, DVD standards define that data are to be recorded by processing according to the MPEG coding method to keep compatibility with other devices.

On the other hand, as for a recording medium such as a hard disk that is mounted on a video recording/reproduction device, there is no problem of compatibility and data can be recorded according to any coding method. Therefore, when the coded data string is outputted to the recording system that records the data on a DVD, the conventional MPEG coding process is carried out. On the other hand, when the coded data string is outputted to the recording system that records the data in a hard disk, the encoding process as described in the first or second embodiment of the present invention can be carried out.

### [Embodiment 5]

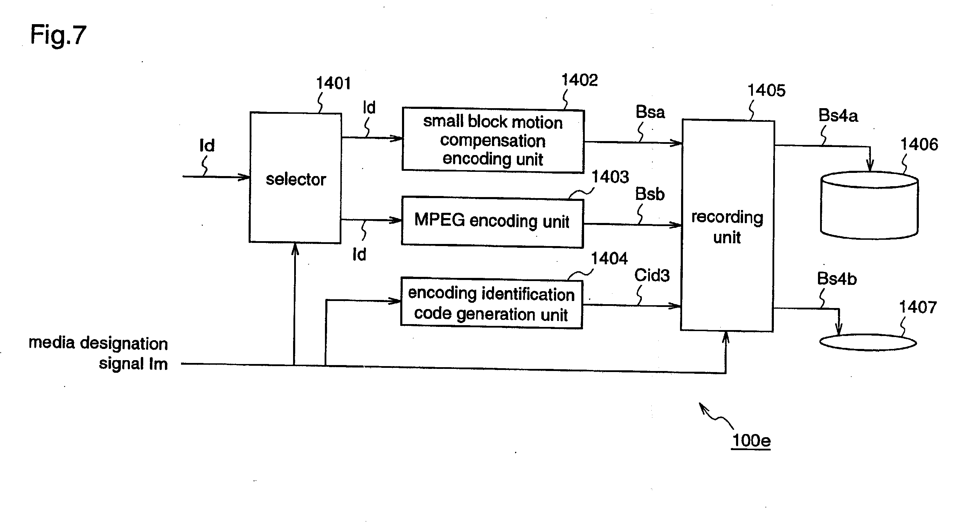

Fig. 7 in a block diagram for explaining a storage device according to a fifth embodiment of the present invention.

A storage device 100e according to the fifth embodiment encodes image data that is inputted as a video signal, as well as selects a recording medium in which the coded image data is to be recorded, from plural recording media in accordance with a media designation signal Im that is generated at the request from the user or the like, thereby to record the coded image data in the selected recording medium.

To be more specific, this storage device 100e includes a first encoding unit (small block motion compensation encoding unit) 1402 that carries out a predictive coding process in which a data unit to be subjected to motion compensation for inputted image data Id is smaller Lhan a data unit that is to be subjected to frequency transformation for the image data Id, and a second encoding unit (MPEG encoding unit) 1403 that carries out a predictive coding process in which a data unit to be subjected to motion compensation for inputted image data Id is larger than a data unit that is to be subjected to frequency transformation for the image data Id. Here, the first encoding unit 1402 is constituted by the encoder 100a according to the first embodiment. The second encoding unit 1403 is constituted by the encoder 700 that performs coding according to the conventional MPEG coding method as shown in Fig. 17. The first encoding unit 1402 can be constituted by the encoder 100b according to the second embodiment.

The storage device 100e further includes a selector 1401 that supplies the inputted image data Id to one of the first encoding unit 1402 and the second encoding uni 1403 in accordance with the media designation signal lm, and an encoding identification code generation unit 1404 that outputs a code (encoding identification code) Cid3 for identifying which of the first and second encoding units is selected by the selector 1401 in accordance with the media designation signal lm.

The storage device 100e further includes a recording unit 1405 that performs processing such as error correction corresponding to each recording medium to a coded data string Bsa that is generated by the small block motion compensation encoding unit 1402 or a coded data string Bsb that is generated by the MPEG encoding unit 1403, and outputs a coded data string Bsa4 or Bsb4 including the processed coded data strinq Bsa or Bsb and the encoding identification code Cid3. This recording unit 1405 performs control for data output in accordance with the media designation signal Im, so that a coded data string Bsa4 including the coded data string Bsa and the encoding identification code Cid3 is outputted to a hard disk 1406, and a coded data string Bsb4 including the coded data string Bsb and the encoding identification code Cid3 is outputted to a DVD 1407.

Next, its operation will be described.

When image data Id is inputted as a video signal to the encoder 100e according to the fifth embodiment, the selector 1401 supplies the image data Id to one of the small block motion compensation encoding unit 1402 and the MPEG encoding unit 1403 in accordance with the media designation signal Im.

To be more specific, when the media designation signal lm indicates the hard disk 1406, the image data Id is supplied to the small block motion compensation encoding unit 1402. On the other hand, when the media designation signal Im indicates the DVD 1407, the image data Id is supplied to the MPEG encoding unit 1403.

Then, when the image data Id is inputted, the small block motion compensation encoding unit 1402 performs predictive coding of the image data Id as in the encoder 100a according to the first embodiment, and outputs a coded data string Bsa. When the image data Id is inputted to the MPEG encoding unit 1403, the MPEG encoding unit 1403 performs predictive coding of the image data Id as in the conventional encoder 700 as shown in Fig. 17, and outputs a coded data string Bsb.

At this time, the encoding identification code generation unit 1404 outputs the code (encoding identification code) Cid3 for identifying which of the first and second encoding units 1402 and 1403 is selected by the selector 1401 in accordance with the media designation signal Ir.

The recording unit 1405 carries out data processing such as error correction corresponding to each recording medium to the coded data string Bsa or Bsb that is generated by the small motion compensation encoding unit 1402 or the MPEG encoding unit 1403, in accordance with the media designation signal Im, and outputs the data string to be recorded Bs4a or Bs4b including the coded data string Bsa or Bsb which has been subjected to the data processing and the encoding identification code Cid3. At this time, the recording unit 1405 performs the data output control for outputting the data string Bs4a to the hard disk 1406 and outputting the data string Bs4b to the DVD 1407, in accordance with the media designation signal Im.

As described above, the storage device 100e according to the fifth embodiment records image data which has been coded according to the MPEG coding method on a DVD, whereby the data conforms to the DVD standards and maintains the compatibility with other DVD devices. On the other hand, in a hard disk, image data which has been coded by the encoder according to the first embodiment is recorded, whereby a coded data string that is obtained by coding the image data at a higher coding efficiency with high-precision motion compensation can be recorded in a medium having few problems of the compaLibility, such as a hard disk.

Further, in this fifth embodiment, the code (encoding identification code) Cid3 for identifying the type of the coding method that is selected in accordance with the media designation signal (i.e., the first or second encoding unit) is recorded in the hard disk 1406 or DVD 1407. Therefore, by reading the encoding identification code that is recorded in the recording medium, the coding method for the recorded coded data string can be identified, whereby an appropriate decoding method can be selected at the decoding.

Further, the encoding identification code may be recorded with being multiplexed with a coded data string, or recorded in an area of a recording medium, which is different from a recording area for the coded data string, for example in an area in which management information for the recorded data is recorded.

Further, processing for recording different coded data strings in the corresponding media may be simultaneously carried out in parallel. For example, a coded data string that is obtained by the small block motion compensation encoding unit 1402 is recorded in the hard disk 1406, while simultaneously a coded data string that is obtained by the MPEG encoding unit 1403 is recorded on the DVD 1407.

Further, while in this fifth embodiment the hard disk and the DVD are employed as the recoding media, the types of the recording media are not restricted to these. For example, an optical disk such as a CD-R, a CD-RW, a DVD-RAM, a DVD-R, a DVD-RW, a DVD+R, and a DVD+RW, or a semiconductor memory, or a magnetic recording medium may be employed. Further, the number of types of the recording media may be any value as long as it is two or more.

### [Embodiment 6]

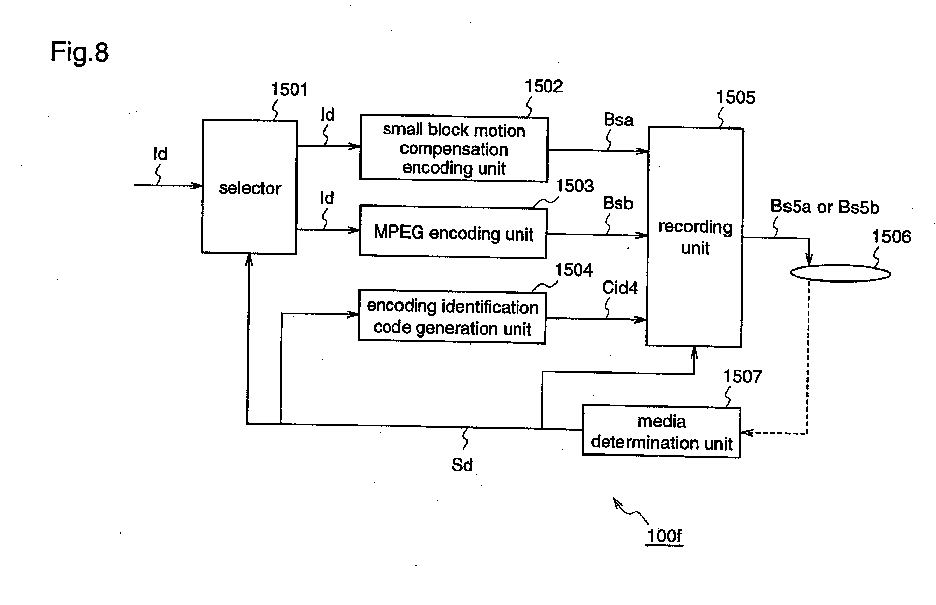

Fig. 8 is a block diagram for explaining a storage device according to a sixth embodiment of the present invention.

A storage device 100f according to the sixth embodiment performs coding of inputted image data Id, as well as changes the coding process for the image data Id according to the type of a recording medium that is mounted on the storage device.

To be more specific, this storage device 100f according to the sixth embodiment includes a first encoding unit (small block motion compensation encoding unit) 1502 that carries out a predictive coding process in which a data unit to be subjected to motion compensation for inputted image data Id is smaller than a data unit that is to be subjected to frequency transformation for the imaqe data Id, and a second encoding unit (MPEG encoding unit) 1503 that carries out a predictive coding process in which a data unit to be subjected to motion compensation for inputted image data Id is larger than a data unit that is to be subjected to frequency transformation for the image data Id. Here, the first encoding unit 1502 is constituted by the encoder 100a according to the first embodiment. The second encoding unit 1503 is an MPEG encoding unit that is constituted by the encoder 700 that performs coding according to the conventional MPEG coding method as shown in Fig. 17. The first encoding unit 1502 may be constituted by the encoder 100b according to the second embodiment.

The storage device 100f includes a media determination unit 1507 that determines the type of a recording medium 1506 that is inserted into a recording drive, and outputs a media determination signal Sd indicating the result of the determination, and a selector 1501 that supplies the inputted imagc data Id to one of the first encoding unit 1502 and the second encoding unit 1503 in accordance with the media determination signal Sd.

Here, the media determination unit 1507 may be, for example, one that reads media information that is recorded in an inner circumference part of the recording medium that is mounted on the recording drive to determine the type of the medium, or one that determines the type of the recording medium according to the intensity of reflected light that: is obtained when laser light is applied to the surface of the recording medium. The media determination unit 1507 may be one that determines the type of the medium according to the configuration of a cartridge of the medium.

The storage device 100f further includes an encoding identification code generation unit 1504 that outputs a code (encoding identification code) Cid4 for identifying which of the first and second encoding units 1502 and 1503 is selected by the selector 1501 in accordance with the media determination signal Sd, and a recording unit 1505 that carries out data processing such as error correction corresponding to each recording medium to a coded data string Bsa that is generated by the small block motion compensation encoding unit 1502 or a coded data string Bsb that is generated by the MPEG encoding unit 1503, and outputs a coded data string Bsa5 or Bsb5 including the processed coded data string Bsa or Bsb and the encoding identification code Cid4.

This recording unit 1505 outputs the coded data string Bsa5 including the coded data string Bsa that is outputted from the small block motion compensation encoding unit 1502, for example when the image data Id is recorded in a medium such as a CD-R or CD-RW, in accordance with the media determination signal Sd. On the other hand, when the image data Id is recorded on a DVD, the recording unit 1505 outputs the coded data string Bsb5 including the coded data string Bsb that is outputted from the MPEG encoding unit 1503.

Next, its operation will be described.

According to the encoder 100f of the fifth embodiment, the media determination unit 1507 determines the type of the recording medium 1506 that has been inserted into the recording drive, and outputs the media determination signal Sd.

Then, when image data Id is inputted as a video signal, the selector 1501 supplies the image data Id to one of the small block motion compensation encoding unit 1502 and the MPEG encoding unit 1503 in accordance with the media determination signal Sd.

To be more specific, when the media determination signal Sd designates a CD-R or CD-RW, the image data Id is supplied to the small block motion compensation encoding unit 1502. On the other hand, when the media determination signal Sd designates a DVD, the image data Id is inputted to the MPEG encoding unit 1503.

When the image data Id is inputted, the small block motion compensation encoding unit 1502 performs predictive coding of the image data Id as in the encoder 100a according to the first embodiment, and outputs a coded data string Bsa. When the image data Id is inputted to the MPEG encoding unit 1503, the MPEG encoding unit 1503 performs predictive coding of the image data Id as in the conventional encoder 700 as shown in Fig. 17, and outputs a coded data string Bsb.

At this time, the encoding identification code generation unit 1504 outputs the code (encoding identification code) Cid4 for identifying which of the first and second encoding units 1502 and 1503 is selected in accordance with the media determination signal Sd.

The recording unit 1505 carries out data processing such as error correction corresponding to the recording medium to the coded data string Bsa or Bsb that is generated by the small motion compensation encoding unit 1502 or the MPEG encoding unit 1503, in accordance with the media determination signal Sd, and outputs the data string to be recorded Bs5a or Bs5b including the coded data string Bsa or Bsb which has been subjected to the data processing and the encoding identification code Cid4.

For example, when data is to be recorded in a medium having looser requirements for the compatibility with other devices, such as a CD-R or CD-RW, the recording unit 1505 outputs the coded data Bsa5 including the coded data string Bsa that is outputted from the small block motion compensation encoding unit 1502. On the other hand, when data is to be recorded in a medium having severer requirements for the compatibility with other devices, such as a DVD, the recording unit 1505 outputs the coded data Bsb5 including the coded data string Bsb that is outputted from the MPEG encoding unit 1503.

As described above, the storage device 100f according to the sixth embodiment records image data which has been coded according to the MPEG coding method in a DVD, thereby conforming to the DVD standards and maintaining the compatibility with other DVD devices. On the other hand, in a medium having looser requirements for the compatibility, i.e., a CD-R, a CD-RW or the like, image data which has been coded by the encoder according to the first embodiment is recorded, whereby a coded data string which has been coded at a higher coding efficiency with higher-precision motion compensation can be recorded.

Further, in this sixth embodiment, the code (encoding identification code) Cid4 for identifying the type of the coding method that is selected in accordance with the media determination signal Sd is recorded on the recording medium 1506. Therefore, by recording the encoding identification code that is recorded on the recording medium, the coding method for the recorded coded data string can be identified on the data decoding end and an appropriate decoding method can be selected at the decoding.

Tn this sixth embodiment, when the coded data string is recorded on a recording medium, the encoding identification code may be recorded with being multiplexed with the coded data string, or recorded in an arca in the recording medium, which is different from a recording area for the coded data string, for example in an area in which management information for the recorded data is recorded.

Further, in this sixth embodiment, the CD-R, CD-RW, or DVD (ROM) is employed as the recording medium, but the types of the recording media are not restricted to these. As the recording medium having looser requirements for the compatibility with other devices, a semiconductor memory or a magnetic recording medium may be employed. Further, as the recording medium having severer requirements for the compatibility with other devices, an optical disk such as a DVD-RAM, a DVD R, a DVD-RW, a DVD+R, and a DVD+RW can be employed.

### [Embodiment 7]

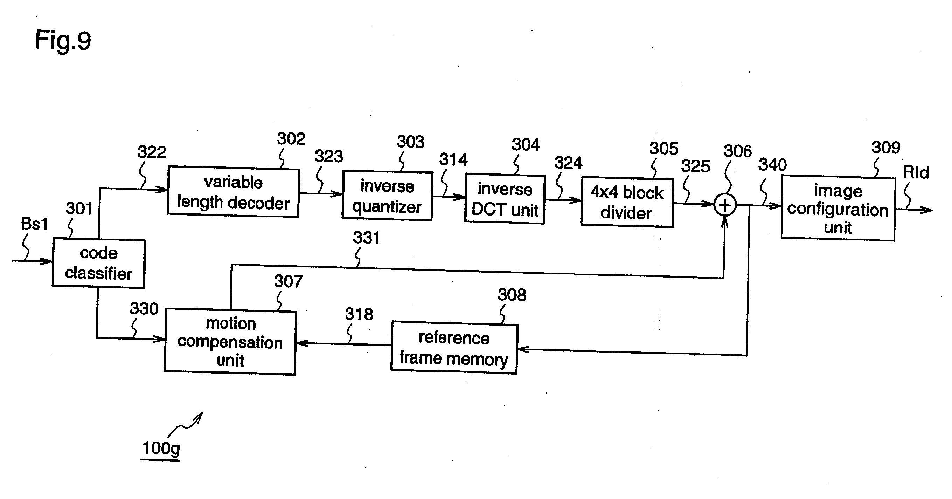

Fig. 9 is a block diagram for explaining a decoder according to a seventh embodiment of the present invention.

A decoder 100g according to the seventh embodiment decodes a coded data string Bs1 that is outputted from the encoder 100a according to the first embodiment.

More specifically, the decoder 100g includes a code classifier 301 that classifies the inputted coded data string Bs1 into a code string 322 of quantized coefficients and a code string of a motion vector and outputs the code string 322 of the quantized coefficients and the motion vector 330, a variable length decoder 302 that subjects the code string 322 of the quantized coefficients to a variable length decoding process, to reconstitute quantized coefficient data 323 of an 8x8 prediction error block, and a motion compensation unit 307 that refers to image data 318 of a decoded frame which is stored in a reference frame memory 308 to output image data of a region in the frame, which is indicated by the motion vector 330, as 4x4 prediction reference block data 331.

The decoder 100g further includes an inverse quantizer 303 that subjects the quantized coefficient data 323 of the 8x8 prediction error block to an inverse quantization process in the quantization step that has been employed at the encoding, to reconstitute DCT coefficient data 314 of the 8x8 prediction error block, and an inverse DCT unit 304 that subjects the DCT coefficient data 314 of the 8x8 prediction error block to inverse twodimensional discrete cosine transformation, to generate 8x8 prediction error block decoded data 324.

The decoder 100g further includes a 4x4 block divider 305 that divides the 8x8 prediction error block decoded data 324 into four pieces of 4x4 prediction error block decoded data 335, unlike the 16x16 block configuration unit 804 in the conventional decoder 800 as shown in Fig. 18.

The decoder 100g further includes an adder 306 that adds the 4x4 prediction error block decoded data 325 and the 4x4 prediction reference block data 331, and outputs decoded data of the 4x4 pixel block (4x4 decoded block data) 340, an image configuration unit 309 that reproduces image data corresponding to a frame from the 4x4 decoded block data 340, and outputs reproduced image data RId, and a reference frame memory 308 that stores the 4x4 decoded block data 340 as data to be referred to at predictive decoding for the next frame of the target frame.

Next, its operation will be described.

When a coded data string Bs1 from the encoder 100a is inputted to the decoder 100g, the code classifier 301 carries out a process of classifying the coded data string Bs1 into a code string 322 of quantized coefficients and a code string of a motion vector, and outputs the code string 322 of the quantized coefficients and the motion vector 330.

The variable length decoder 302 subjects the code string 322 of the quantized coefficients to the variable length decoding process, to generate quantized data 323 that is composed of the quantized coefficients in a two-dimensional array, corresponding to an 8x8 prediction error block. Further, the inverse quantizer 303 transforms the quantized data 323 of the 8x8 prediction error block into DC coefficient data 314 that is composed of DCT coefficients in a two-dimensional array corresponding to the 8x8 prediction error block, according to an inverse quantization process using the quantization step at the encoding. The inverse DCT unit 309 transforms the DCT coefficient data 314 of the 8x8 prediction error block into decoded data 324 of the 8x8 prediction error block according to the inverse two-dimensional discrete cosine transformation.

The 4x4 block divider 305 divides the 8x8 prediction error block of decoded data 324 into four 4x4 prediction error blocks of decoded data 325. Here, as shown in Fig. 2(a), one 8x8 prediction error block BL8 corresponds to four 4x4 prediction error blocks BL4a to BL4d.

The motion compensation unit 307 performs motion compensation with referring to the image data 318 of a decoded frame which is stored in the reference frame memory 308, and outputs image data of a region in the frame, indicated by the motion vector 330, as 4x4 prediction reference block data 331.

The adder 306 adds the 4x4 prediction error block data 325 and the prediction reference block data 331 that is obtained by the motion compensation unit 307, and outputs 4x4 pixel block decoded data 340. The image configuration unit 309 reproduces decoded data corresponding to a frame from the decoded data 340 corresponding to the 4x4 pixel block, and outputs reproduced image data RId. The 4x4 pixel block decoded data 340 is stored in the reference frame memory 308 as data of a prediction reference frame that is employed at predictive decoding for the next frame of the target frame.

As described above, according to the seventh embodiment, when the predictive decoding of a coded data string is performed, the motion compensation is performed in units of block that is composed of 4x4 pixels, and the inverse DCT transformation is performed in units of block that is composed of 8x8 pixels. Therefore, image data which has been coded with finer motion componsation can be properly decoded, thereby implementing a decoding process that is suited for a coding process with a higher coding efficiency.

In this seventh embodiment, the motion compensation is performed in units of block that is composed of 4x4 pixels, and the inverse DCT transformation is performed in units of block that is composed of 8x8 pixels. However, the configurations of the blocks which are subjected to the motion compensation and the inverse DCT transformation are not restricted to those as described in the seventh embodiment. The block as the unit for the inverse DCT transformation may be one that is obtained by combining a plurality of the blocks as the unit for the motion compensation. For example, it is possible to perform the motion compensation in units of block that is composed of 2x8 pixels (2x8 pixel block), and perform the DCT transformation in units of block that is composed of 8x8 pixels (8x8 pixel block), which is obtained by combining four of these 2x8 pixel blocks.

Further, in this seventh embodiment, the inverse DCT transformation is performed with taking four units for the motion compensation as a unit. However, the inverse DCT transformation can be performed in any units, as long as it is performed with taking plural units for the motion compensation as a unit.

Further, in this seventh embodiment, the inverse DCT transformation performed as the inverse frequency transformation for the image data. However, other inverse frequency transformation for image data may be employed and, for example, inverse Hadamard transformation can be performed.

Further, the inverse quantization for transforming quantisation coefficients into DCT coefficients is not restricted to one described in the seventh embodiment. For example, when the quantized coefficients are obtained by vector quantization for DCT coefficients, inverse vector quantization is of course employed as the inverse quantization for the quantized coefficients.

### [Embodiment 8]

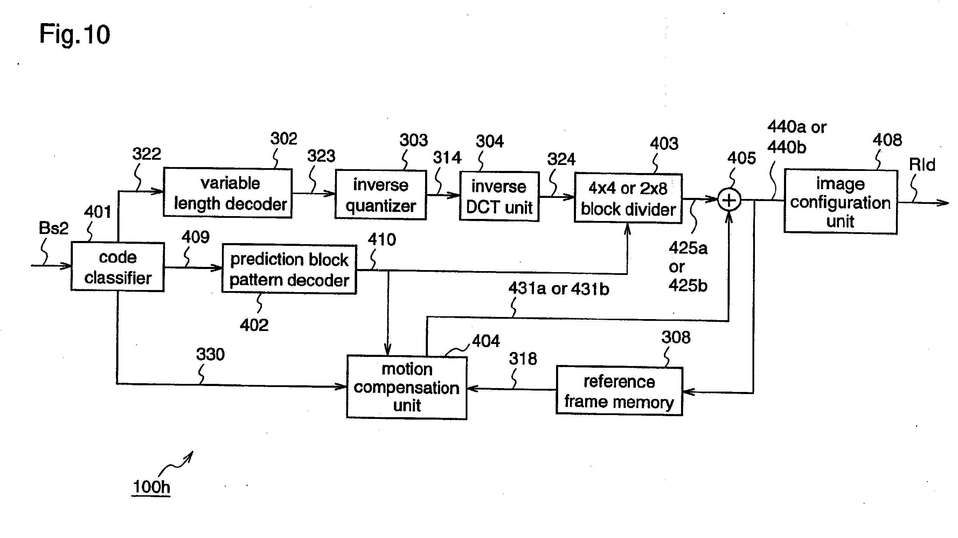

Fig. 10 is a block diagram for explaining a decoder according to an eighth embodiment of the present invention.

A decoder 100h according to the eighth embodiment performs motion compensation at predictive decoding for coded image data in units of data that is smaller than a data unit to be subjected to the inverse DCT transformation, as in the decoder 100g of the seventh embodiment. The decoder 100h according to the eighth embodiment is different from the decoder 100h ot the seventh embodiment in that one of two motion compensation modes is adaptively selected at the predictive decoding.

That is, the decoder 100h according to the eighth embodiment can decode a coded data string Bs2 that is outputted from the encoder 100b according to the second embodiment. In Fig. 10, the same reference numerals as those in Fig. 9 denote the same elements as those in the decoder 100g according to the seventh embodiment.

More specifically, the decoder 100h includes a code classifier 401 that classifies the inputted coded data string Bs2 into a code string 322 of quantized coefficients, a code corresponding to a motion vector, and a code 409 corresponding to a motion compensation mode identification signal, and outputs the code string 322 of the quantized coefficients and the motion vector 330, and the code 409 corresponding to the motion compensation mode identification signal; and a prediction block pattern decoder 402 that decodes the code 409 corresponding to the motion compensation mode identification signal and outputs a motion compensation mode identification signal 410 for identifying an arrangement pattern of 4x4 prediction error blocks and 2x8 prediction error blocks, which partition one 8x8 prediction error block.

The decoder 100h further includes a variable length decoder 302 that subjects the code string 322 of the quantized coefficients to a variable length decoding process, to reconstitute quantized coefficient data 323 of a 8x8 prediction error block, and a motion compensation unit 404 that performs motion compensation with referring to image data 318 of a decoded frame which is stored in a reference frame memory 308 in accordance with the motion vector 330 and the motion compensation mode identification signal 410, and outputs image data of a region in the frame, which is indicated by the motion vector 330, as 4x4 prediction reference block data 431a or 2x8 prediction reference block data 431b.

The decoder 100h further includes an inverse quantizer 303 that subjects the quantized coefficient data 323 of the 8x8 prediction error block to inverse quantization in the quantization step that has been employed at the encoding, to reconstitute DCT coefficient data 314 of the 8x8 prediction error block, and an inverse DCT unit 304 that subjects the DOT coefficient data 314 of the 8x8 prediction error block to inverse two-dimensional discrete cosine transformation, to generate 8x8 prediction error block decoded data 324.

The decoder 100h further includes a block divider 403 that, in accordance with the motion compensation mode identification signal 410 corresponding to an 8x8 prediction error block as a target to be processed, divides the data 324 of the 8x8 prediction error block into data 425a of 4x4 prediction error blocks or data 425b of 2x8 prediction error blocks, which constitute the 8x8 prediction error block.

The decoder 100h according to the eighth embodiment further includes an adder 405 that performs addition of adding the 4x4 prediction error block data 425a and the 4x4 prediction reference block data 431a to output 4x4 prediction block decoded data 440a, or addition of adding the 2x8 prediction error block data 425b and the 2x8 prediction reference block data 431b to output 2x8 prediction block decoded data 440b.

The decoder 100h further includes an image configuration unit 408 that reproduces image data corresponding to a frame, from the 4x4 prediction block decoded data 440a or 2x8 prediction block decoded data 440b outputted from the adder 405, and outputs reproduced image data RId, and a reference frame memory 308 that stores the 4x4 prediction block decoded data 440a or 2x8 prediction block decoded data 440b outputted from the adder 405, as data of a reference frame to be referred to at predictive decoding for the next frame of the target frame.

Next, its operation will be described.

When a coded data string Bs2 from the encoder 100b is inputted to the decoder 100h, the code classifier 401 carries out a process of classifying the inputted coded data string Bs2 into a code string 322 of quantized coefficients, a code corresponding to a motion vector, and a code 409 corresponding to a motion compensation mode identification signal, and outputs the code string 322 of the quantized coefficients, the motion vector 330, and the code 109 of the motion compensation mode identification signal.

The code string 322 of the quantized coefficients is processed by the variable length decoder 302, the inverse DCT unit 303, and the inverse quantizer 303, as in the seventh embodiment, to obtain 8x8 prediction error block decoded data 324. The 8x8 prediction error block data 324 is inputted to the block divider 403, and the code 409 of the motion compensation mode identification signal is inputted to the prediction block pattern decoder 402.

The prediction block pattern decoder 402 decodes the code 409 of the motion compensation mode identification signal, and outputs a motion compensation mode identification signal 410 for identifying an arrangement pattern of the 4x4 prediction error blocks or the 2x8 prediction error blocks in one 8x8 prediction error block.

The block divider 403 divides the 8x8 prediction error block decoded data 324 into decoded data 425a of 4x4 prediction error blocks or decoded data 425b of 2x8 prediction error blocks, which constitute the 8x8 prediction error block, in accordance with the motion compensation mode identification signal 410 corresponding to the 8x8 prediction error block as a processing target.

Here, arrangement patterns of the 4x4 prediction error blocks or the 2x8 prediction error blocks in one 8x8 prediction error block are, for example, those shown in Figs. 4(a) to 4(c), and one of the arrangement patterns is specified by the motion compensation mode identification signal 410.

The motion compensation unit 404 performs motion compensation in accordance with the motion compensation mode identification signal 410 and the motion vector 330, and outputs data of a region in thc reference frame, indicated by the motion vector 330, i.e., 4x4 prediction reference block data 431a or 2x8 prediction reference block data 431b. Whether the 4x4 prediction reference block or the 2x8 prediction reference block is to be employed as the prediction reference block is decided in accordance with the motion compensation mode identification signal 410.

The adder 405 performs addition of adding the 4x4 prediction error block data 425a and the 4x4 prediction reference block data 431a or addition of adding the 2x8 prediction error block data 425b and the 2x8 prediction reference block data 431b, and outputs decoded data of the 4x4 prediction block (4x4 decoded block data) 440a or decoded data of the 2x8 prediction block (2x8 decoded block data) 440b.

The image configuration unit 408 reproduces image data corresponding to a frame, from the 4x4 decoded block data 440a or the 2x8 decoded block data 440b, and outputs reproduced image data RId. The 4x4 decoded block data 440a or 2x8 decoded block data 440b is stored in the reference frame memory 308 as data of a reference frame that is used at predictive decoding for the next frame of the target frame.

As described above, the decoder 100h according to the eighth embodiment generates the 4x4 prediction reference block data 431a or 2x8 prediction reference block data 431b in accordance with the signal 410 that indicates an arrangement pattern of the 4x4 prediction error blocks or 2x8 prediction error blocks in the 8x8 prediction error block that is used as a unit for the inverse DCT transformation. Therefore, image data which has been coded with finer motion compensation by using plural kinds of blocks having different configurations as data units for motion compensation can be properly decoded, thereby implementing predictive decoding corresponding to predictive coding with a higher coding efficiency.

In this eighth embodiment, the motion compensation is performed in units of data block that is composed of 4x4 pixels and 2x8 pixels, and the inverse DCT transformation is performed in units of data block that is composed of 8x8 pixels. However, the configurations of the blocks as units for the motion compensation and the inverse DCT transformation are not restricted to those described in the eighth embodiment. The unit corresponding to the inverse DCT transformation may be any configuration so long as the inverse DCT transformation is performed in units of block that is obtained by combining plural blocks which are to be subjected to the motion compensation.

Further, in this eighth embodiment, the inverse DCT transformation is performed in units of data that is obtained by combining four data units for the motion compensation. However, the unit for the inverse DCT transformation is not restricted to this. The inverse DCT transformation can be performed in any units of data that is composed of plural data units for the motion compensation.

Further, in this eighth embodiment, the inverse DCT transformation is performed as the inverse frequency transformation for coefficient data that has been obtained by the frequency transformation. However, other types of the inverse frequency transformation may be employed and, for example, inverse Hadamard transformation can be performed.

Further, as the inverse quantization that transforms quantization coefficients into DCT coefficients in the eighth embodiment, for example when the quantized coefficients are obtained by vector quantization for DCT coefficients, inverse vector quantization is of course employed as the inverse quantization for the quantized coefficients.

Further, the decoder according to the seventh or eighth embodiment can includes, in addition to the construction as shown in Figs. 9 and 10 (first decoding unit), a decoding unit that performs decoding according to the conventional MPEG decoding method (second decoding unit), and select one of the decoding units to decode inputted coded data in accordance with management information for the coded data.

In this case, the management information includes identification information that indicates a coding method that was employed when the coded data was generated (coding information). For example, the management information of the coded data is recorded in a predetermined area of a recording medium, and attached to a coded data string as its header information. This management information enables the decoder to identify the coding method that was employed at the generation of the inputted coded data string, and perform decoding that is suited for the inputted coded data string.

### [Embodiment 9]

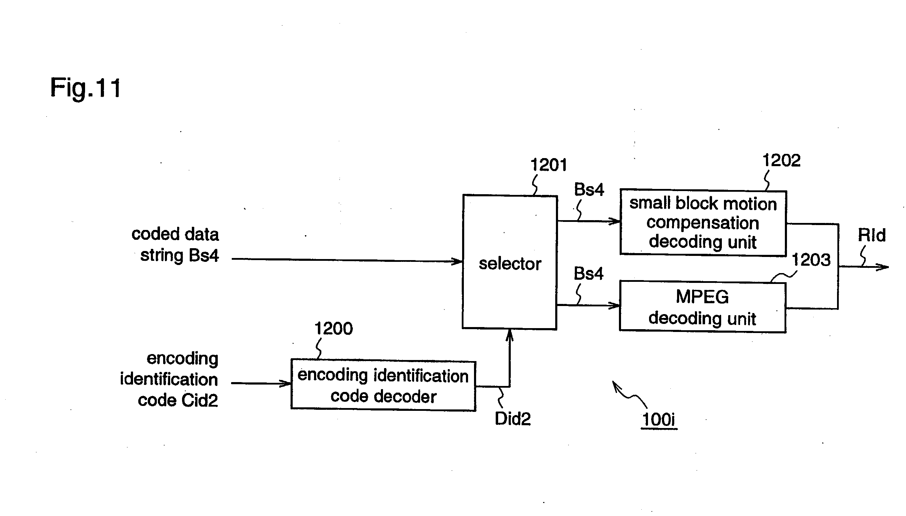

Fig. 11 is a block diagram illustrating a decoder according to a ninth embodiment of the present invention.

A decoder 100i according to the ninth embodiment includes a first decoding unit (small block motion compensation decoding unit) 1202 and a second decoding unit (MPEG decoding unit) 1203, which carry out different decoding processes, respectively, and decodes a coded data string Bs4 that is outputted from the encoder 100d according to the fourth embodiment in a decoding unit that is selected in accordance with the encoding identification code Cid2 from the encoder 100d.

Here, the first decoding unit 1202 is constituted by the decoder 100g according to the seventh embodiment, and subjects the inputted coded data string Bs4 to apredictive decoding process in which a data unit for the motion compensation (4x4 pixel block) is smaller than a data unit for the inverse DCT transformation (8x8 pixel block. The first decoding unit 1202 may be constituted by the decoder 100h according to the eighth embodiment. Further, the second decoding unit 1203 is constituted by the decoder 800 according to the conventional MPEG decoding method as shown in Fig. 18, and subjects the coded data string Bs4 to a predictive decoding process in which a data unit for the motion compensation (16x16 pixel block) in larger than a data unit for the inverse DCT transformation (8x8 pixel block).

The decoder 100i further includes an encoding identification code decoding unit 1200 that decodes the encoding identification code Cid2 from the encoder 100d and outputs identification information Did2, and a selector 1201 that supplies the coded data string Bs4 to one of the first and second decoding units 1202 and 1203 in accordance with the identification information Did2.

Next, its operation will be described.

When the coded data string Bs4 from the encoder 100d is inputted to the decoder 100i according to the ninth embodiment together with the encoding identification code Cid2, the encoding identification code decoding unit 1200 decodes the encoding identification code Cid2 and outputs the identification information Did2, and the selector 1201 selects one of the first and second decoding units 1202 and 1203 in accordance with the identification information Did2 to decode the coded data string Bs4, and supplies the coded data string Bs4 to the selected one of the first and second decoding units 1202 and 1203.

When the coded data string Bs4 is inputted, the first decoding unit (small block motion compensation decoding unit) 1202 subjects the coded data string Bs4 to the predictive decoding process in which a daLa unit for the motion compensation is smaller than a data unit for the inverse DCT transformation, as in the decoder 100g according to the seventh embodiment, and outputs reproduced data RId. When the coded data string Bs4 is inputted to the MPEG decoding unit 1203, the MPEG decoding unit 1203 subjects the coded data string to the predictive decoding process in which a data unit for the motion compensation is larger than a data unit for the inverse DCT transformation as in the conventional decoder 800, and outputs reproduced data RId.

As described above, the decoder 100i according to the ninth embodiment decodes the inputted coded data string according to the decoding process corresponding to the inputted coded data string in accordance with the identification information indicating the coding method that was employed at the generation of the data. Therefore, the coded data string which has been obtained by the coding process according to the coding rate or the like can be properly decoded.

In this ninth embodiment, the decoder corresponding to the encoder that switches the coding process according to the coding rate, i.e., the decoder switches the decoding process adaptively to the coding process that was selected on the coding end. However, the decoder can switch the decoding process according to input systems of coded data strings.

For example, as the coded data input systems, there are for example a data recording system that reads coded data from one or plural kinds of recording media and outputs the data, and a data transmission system that transmits coded data through transmission lines having one or plural kinds of transmission bands. More specifically, when coded data that is read out from a DVD is to be reproduced, the coded data is subjected to the conventional MPEG decoding process. On the other hand, when coded data that is read out from a hard disk is to be reproduced, the coded data is subjected to the predictive coding process in which a data unit for the motion compensation is smaller than a data unit for the inverse DCT transformation, as in the decoder according to the seventh or eighth embodiment of the present invention.

### [Embodiment 10]

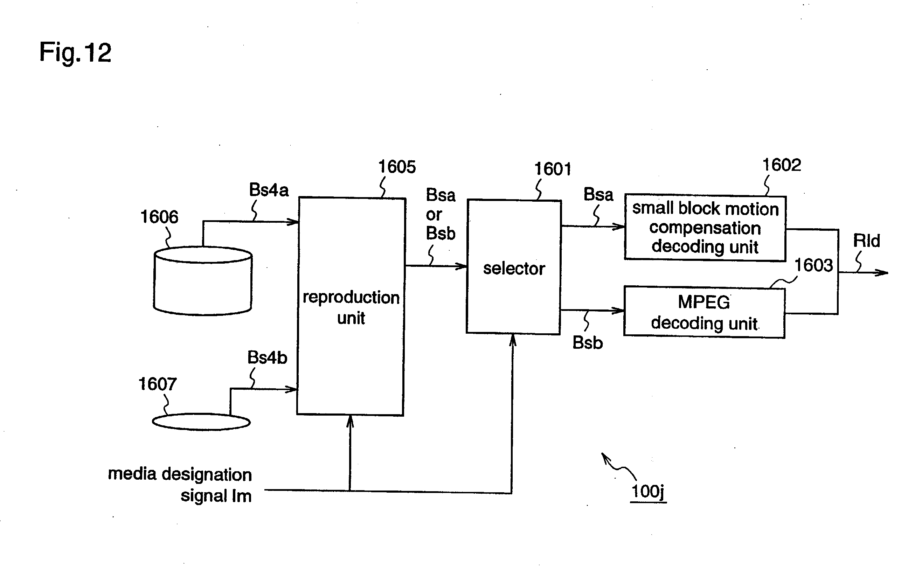

Fig. 12 is a block diagram for explaining a reproduction device according to a tenth embodiment.

A reproduction device 100j according to the tenth embodiment decodes a coded data string Bs4b that is read from a DVD 1607 according to the conventional MPEG decoding process, and decodes a coded data string Hs4a that is read from a hard disk 1606 according to the predictive decoding process in which a data unit for the motion compensation is smaller than a data unit for the inverse DCT transformation as in the decoder 100g according to the seventh embodiment. This reproduction device 100j can reproduce the coded data Bs4a and Bs4b that are outputted from the recording media 1406 and 1407 of the storage device 100e according to the fifth embodiment.

To be more specific, the reproduction device 100j according to the tenth embodiment includes a reproduction unit 1605 that subjects the coded data string Bs4a that is read from the hard disk 1606 and the coded data string Bs4b that is read from the DVD 1607 to a reproduction process such as error correction corresponding to the respective recording media in accordance with a media designation signal Im, and outputs reproduced data. This reproduction unit 1605 outputs a reproduced coded data string Bs4a as a coded data string Bsa, and a reproduced coded data string Bs4b as a coded data string Rsb.

The reproduction device 100j further includes a selector 1601 that selects one of the coded data string Bsa and Bsb in accordance with the media designation signal Im, and supplies the coded data string Bsa to the first decoding unit 1602, and the coded data string Bsb to the second decoding unit 1603.

The reproduction device 100j includes the first decoding unit (small block motion compensation decoding unit) 1602 that is constituted by the decoder 100g according to the seventh embodiment, and subjects the inputted coded data string Bsa to the predictive decoding process in which a data unit for the motion compensation (4x4 pixel block) is smaller than a data unit for the inverse DCT transformation (8x8 pixel block), thereby to output reproduced image data RId; and a second decoding unit (MPEG decoding unit) 1603 that is constituted by the decoder 800 according to the conventional MPEG decoding method as shown in Fig. 18, and subjects the coded data string Bsb to the predictive decoding process in which a data unit for the motion compensation (16x16 pixel block) is larger than a data unit for the inverse DCT transformation (8x8 pixel block), thereby to output reproduced image data RId.

Here, the first decoding unit 1602 may be constituted by the decoder 100h according to the eighth embodiment.

Next, its operation will be described.

When the coded data string Bs4b that is read from the DVD 1607 or the coded data string Bs4a that is read from the hard disk 1606 is inputted to the reproduction device 100j according to the tenth embodiment, the reproduction unit 1605 subjects the coded data Bs4a or Bs4b to the reproduction process such as the error correction corresponding to the respective recording medium, in accordance with the media designation signal lm, and outputs a reproduced coded data string Bsa or a reproduced coded data string Bsb to the selector 1601.

The selector 1601 selects the coded data string Bsa or Bsb in accordance with the media designation signal Im, and supplies the selected coded data string Bsa to the first decoding unit 1602 or the selected coded data string Bsb to the second decoding unit 1603.

The first decoding unit 1602 subjects the inputted coded data string Bsa to the predictive decoding process in which a data unit for the motion compensation is smaller than a data unit for the inverse DCT transformation, and outputs reproduced image data RId. The second decoding unit 1603 subjects the inputted coded data string Bsb to the predictive decoding process in which a data unit for the motion compensation is larger than a data unit for the inverse DCT transformation, and outputs reproduced image data RId.

As described above, the reproduction device 100j according to the tenth embodiment decodes a coded data string Bs4a that is read from the hard disk according to the predictive decoding process in which the data unit for the motion compensation is smaller than the data unit for the inverse DCT trans formation, and decodes a coded data string Bs4b that is read from the DVD to the predictive decoding process in which the data unit for the motion compensation is larger than the data unit for the inverse DCT transformation. Therefore, coded data strings which are obtained by the coding at a high coding efficiency with higher-precision motion compensation and which are recorded in a recording medium having looser requirements for the compatibility with other devices, such as a hard disk, and coded data strings which are obtained by the general-purpose predictive coding and recorded in a recording medium having severer requirements for the compatibility with other devices, such as a DVD, can be decoded according to the appropriate predictive decoding process.

### [Embodiment 11]

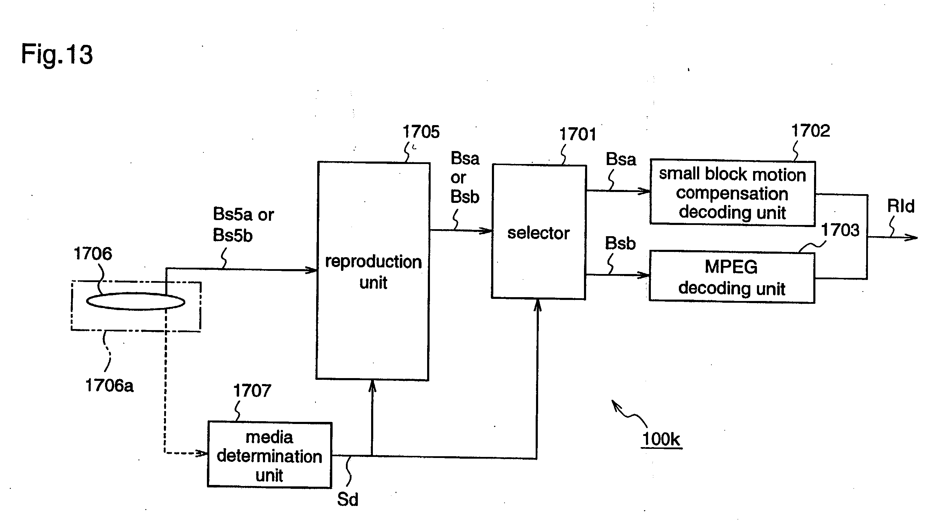

Fig. 13 is a block diagram for explaining a reproduction device according to an eleventh embodiment of the present invention.

A reproduction device 100k according to the eleventh embodiment changes a decoding process for a coded data string according to the type of a recording medium that holds the coded data string. This reproduction device 100k can reproduce a coded data string Bs5a or Bs5b that is read from the recording medium of the storage device 100f according to the sixth embodiment.

Here, the coded data string Bs5a is data that is recorded in a recording medium having looser requirements for the compatibility with other devices, such as a CD-R or a CD-RW, and this data is obtained by coding image data by the first encoding unit (small block motion compensation encoding unit) 1502 of the storage device 100f according to the sixth embodiment. The coded data string Bs5b is data that is recorded in a recording medium having severer requirements for the compatibility with other devices, such as a DVD, and this data is obtained by coding image data by the second encoding unit (MPEG encoding unit) 1503 of the storage device 100f according to the sixth embodiment.

To be more specific, the reproduction device 100k according to the eleventh embodiment includes a recording drive 1706a that accesses data in a recording medium 1706, a media determination unit 1707 that determines the type of the recording medium 1706 that is mounted on the recording drive 1706a and outputs a media determination signal Sd that indicates the result of the determination, and a reproduction unit 1705 that subjects the coded data string Bs5a or Bs5b to a reproduction process such as error correction corresponding to each recording medium, in accordance with the media determination signal Sd, and outputs a coded data string Bsa or Bsb.

Here, the coded data string Bsba is a coded data string that is read from a CD-R or a CD-RW, and the coded data string Bs5b is a coded data string data that is read from a DVD.

The reproduction device 100k further includes a selector 1701 that selects one of the coded data string Bsa and Bsb in accordance with the media determination signal Sd, and supplies the coded data string Bsa to the first decoding unit 1702, and the coded data string Bsb to the second decoding unit 1703.

The reproduction device 100k includes the first decoding unit (small block motion compensation decoding unit) 1702 that is constituted by the decoder 100g according to the seventh embodiment, and subjects the coded data string Bsa to the predictive decoding processin which a data unit for the motion compensation is smaller than a data unit for the inverse DCT transformation, thereby to output reproduced image data RId, and the second decoding unit (MPEG decoding unit) 1703 that is constituted by the decoder 800 according to the conventional MPEG decoding method as shown in Fig. 18, and subjects the coded data string Bsb to the predictive decoding process in which a data unit for the motion compensation is larger than a data unit for the inverse DCT transformation, thereby to output reproduced image data Rld.

Here, the first decoding unit 1702 may be constituted by the decoder 100h according to the eighth embodiment.

Next, its operation will be described.

In the reproduction device 100k according to the eleventh embodiment, when a recording medium 1706 is inputted to the recording drive 1706a, the media determination unit 1707 determines the type of the recording medium and outputs a media determination signal Sd that indicates the result of the determination.

Then, the reproduction unit 1705 subjects the coded data Bs5a and Bb5b that is recorded in the recording medium 1706 to the reproduction process such as the error correction corresponding to the type of the recording medium 1706, in accordance with the media determination signal Sd, and outputs a reproduced coded data string Bsa or Bsb to the selector 1601.

The selector 1601 supplies the inputted coded data string Bsa to the first decoding unit 1702 or the coded data string Bsb to the second decoding unit 1703, in accordance with the media determination signal Sd.

The first decoding unit 1702 subjects the inputted coded data string Bsa to the predictive decoding process in which a data unit for the motion compensation is smaller than a data unit for the inverse DCT transformation, and outputs reproduced image data RId. The second decoding unit 1703 subjects the inputted coded data string Bsb to the predictive decoding process in which a data unit for the motion compensation is larger than a data unit for the inverse DCT transformation, and outputs reproduced image data RId.

As described above, the reproduction device 100k according to the eleventh embodiment changes the decoding process for the coded data according to the type of the recording medium that retains the coded data, whereby image data which have been coded according to the coding method that is suited for the type of the recording medium can be decoded by an appropriate decoding process.

### [Embodiment 12]

Hereinafter, a handy phone that includes the decoder according to the seventh embodiment will be described as a twelfth embodiment of the present invention.

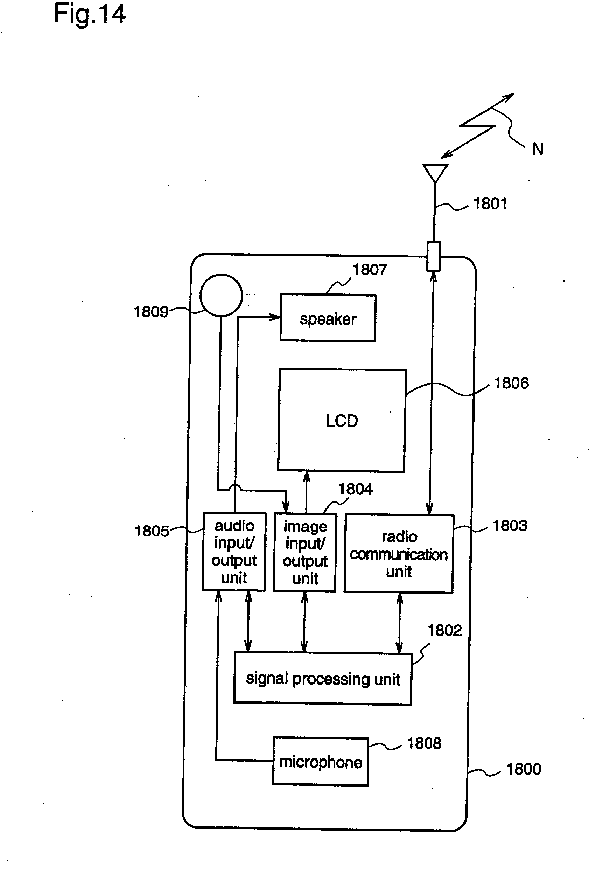

Fig. 14 is a diagram for explaining the handy phone according to the twelfth embodiment.

A handy phone 1800 according to the twelfth embodiment includes a signal processing unit 1802 for performing various kinds of signal processing; and a radio communication unit 1803 for outputting a radio signal N received by an antenna 1801 to the signal processing unit 1802 as a reception signal, and transmitting a transmission signal generated by the signal processing unit 1802 from the antenna 1801 as a radio signal N.

The handy phone 300 further includes a liquid crystal display (LCD) 1806 for performing video display; a microphone 1808 for receiving sounds: a speaker 1807 for reproducing an audio signal; a camera unit 1809 for taking an image of an object and outputting an image signal; an image input/output unit 1804 for outputting the image signal from the camera unit 1809 to the signal processing unit 1802, and controlling the LCD 1806 so as to perform video display on the basis of the image signal that has been processed by the signal processing unit 1802; and an audio input/output unit 1805 for outputting the input audio signal from the microphone 1808 to the signal processing unit 1802, and outputting the audio signal processed by the signal processing unit 1802 to the speaker 1807. For simplification, a button operation section of the handy phone is not. shown in the figure.

The signal processing unit 1802 has an image decoding unit. (not shown) that performs the same decoding process as that in the decoder according to the seventh embodiment.

In this handy phone 1800 according to the twelfth embodiment, when a code string of image data included in the received radio signal is decoded according to a predictive decoding process, the motion compensation is performed in units of block that is composed of 4x4 pixels, and the inverse DCT transformation is performed in units of block that is composed of 8x8 pixels. Therefore, image data which have been coded with fine motion compensation so as to be adapted for a handy phone that handles images of smaller sizes can be properly decoded.

In this twelfth embodiment, the signal processing unit in the handy phone includes the decoder according to the seventh embodiment. However, the handy phone may include the encoder according to any of the first to fourth embodiments, the decoder according to the fifth or sixth embodiment, or the reproduction device according to any of the ninth to eleventh embodiments.

Further, in the first to eleventh embodiments the encoder, the decoder, the storage device, and the reproduction device are implemented by hardware, while these apparatuses may be implemented by software. In this case, by recording a program for performing the data processing as described in any of the above embodiments in a data storage medium such as a flexible disk, the above-mentioned data processing can be constructed in an independent computer system.

In this case, processing by circuit elements other than the recording medium, which constitute the encoder, the decoder, the storage device or the reproduction device according to any of the first to eleventh embodiments, is implemented by software.

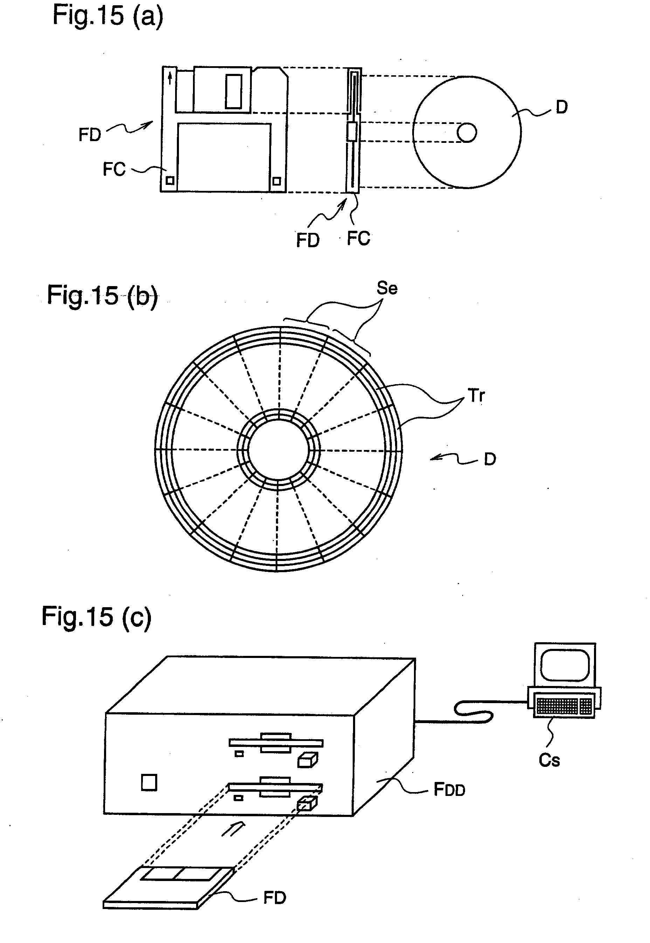

Figs. 15 are diagrams for explaining a storage medium which contains a program for performing the data processing according to any of the first to eleventh embodiments with software, and a computer system including the storage medium.

Fig. 15(a) shows the front view of a flexible disk FD, the cross-sectional view thereof, and a flexible disk body D, and Fig. 15(b) shows an example of a physical format of the flexible disk body D.

To be specific, the flexible disk FD is constituted by the flexible disk body D and the flexible disk case FC. On the surface of the flexible disk body D, plural tracks Tr are concentrically formed from the outer circumference toward the inner circumference. Each track Tr is divided into 16 sectors Se in the angular direction. Accordingly, in the flexible disk FD in which the above-described program is stored, data as the program are recorded in the sectors Se assigned onto the flexible disk body D.

Fig. 15(c) shows a construction for recording the program on the flexible disk FD, and a construction for performing the data processing by software using the program recorded on the flexible disk FD.

When recording the program on the flexible disk FD, data of the program supplied from a computer system Cs are written in the flexible disk FD via a flexible disk drive FDD. On the other hand, when constructing the device according to any of the first to eleventh embodiments in the computer system Cs using the program recorded on the flexible disk FD, the program is read from the flexible disk FD by the flexible disk drive FDD, and loaded onto the computer system Cs.

While in the above description a flexible disk is employed as the data storage medium, an optical disk may be employed as the data storage medium. Also in this case, the data processing by software can be carried out in the same manner as described with respect to the flexible disk. Further, the data storage medium is not restricted to the optical disk and the flexible disk. Any medium, such as an lC card or a ROM cassette, may be employed so long as the program can be stored in the medium. Also in the case where these data storage media are employed, the data processing by software can be carried out in the same manner as described for the flexible disk.

## Claims

1. An encoder that predictively encodes image data in units of frame, by using a pixel value correlation between frames, including:
a data prediction unit for performing a prediction process of predicting image data corresponding to a target frame to be processed, in units of prediction block being composed of plural pixels, which is obtained by dividing the target frame, thereby to generate predicted image data; and
a data encoding unit for encoding the image data corresponding to the target frame in units of encoding block that is composed of a plurality of the prediction blocks, by using predicted image data corresponding to the encoding block.

2. The encoder of Claim 1 wherein
the data prediction unit includes a data generation unit for generating predicted image data corresponding to each of plural kinds of prediction blocks having ditferent configurations; and selects, from the predicted image data corresponding to the plural kinds of prediction blocks having different configurations, predicted image data corresponding to a prediction block having a highest coding efficiency for the encoding block, thereby to generate predicted image data corresponding to the encoding block.

3. The encoder of claim 2 wherein
the data prediction unit outputs block identification information that indicates predicted image data of a prediction block having a configuration, which is selected from the predicted image data corresponding to the plural kinds of prediction blocks having different configurations.

4. The encoder of Claim 1 wherein
the data prediction unit includes a data generation unit for generating predicted image data corresponding to each of plural kinds of prediction blocks having different configurations; and combines the predicted image data corresponding to the plural kinds of prediction blocks having different configurations so that the plural kinds of prediction blocks are arranged in the encoding block according to an arrangement pattern having a highest coding efficiency for the encoding block, thereby to generate predicted image data corresponding the encoding block.

5. The encoder of Claim 4 wherein
the data prediction unit outputs block arrangement information that indicates the arrangement pattern of the plural kinds of prediction blocks in the encoding block.

6. An encoder that predictively encodes image data in units of frame, by using a pixel value correlation between frames, including:
a first predictive coding unit that includes: a first data prediction unit for performing a prediction process of predicting image data corresponding to a target frame to be processed, in units of first prediction block being composed of plural pixels, which is obtained by dividing the target frame, thereby to generate first predicted image data; and a first data encoding unit for encoding the image data corresponding to the target frame in units of first encoding block that is composed of a plurality of the first prediction blocks, by using first predicted image data corresponding to the first encoding block;
a second predictive coding unit that includes: a second data prediction unit for performing a prediction process of predicting image data corresponding to a target frame to be processed, in units of second prediction block being composed of plural pixels, which is obtained by dividing the target frame, thereby to generate second predicted image data; and a second data encoding unit for encoding the image data corresponding to the target frame in units of second encoding block that is obtained by dividing the second prediction block, by using second predicted image data corresponding to the second encoding block; and
a selector for supplying the image data to one of the first predictive coding unit and the second predictive coding unit, in accordance with a instruction signal from outside.

7. An encoding method for predictively encoding image data in units of frame, by using a pixel value correlation between frames, including:
a prediction step of performing a prediction process of predicting image data corresponding to a target frame to be processed, in units of prediction block being composed of plural pixels, which is obtained by dividing the target frame, thereby generating predicted image data; and
an encoding step of encoding the image data corresponding to the target trame in units of encoding block that is composed of a plurality of the prediction blocks, by using predicted image data corresponding to the encoding block.

8. The encoding method of Claim 7 wherein
the prediction step includes steps of:
generating predicted image data corresponding to each of plural kinds of prediction blocks having different configurations;
selecting, from the predicted image data corresponding to the plural kinds of prediction blocks having different configurations, predicted image data corresponding to a prediction block having a highest coding efficiency for the encoding block; and
generating predicted image data corresponding to the encoding block from the predicted image data of the selected prediction block.

9. The encoding method of Claim 8 wherein
the prediction step includes a step of:
generating block indication information that indicates predicted image data of a prediction block having a configuration, which is selected from the predicted image data corresponding to the plural kinds of prediction blocks having different configurations.

10. The encoding method of Claim 7 wherein
the prediction step including steps of:
generating predicted image data corresponding to each of plural kinds of prediction blocks having different configurations;
deciding an arrangement pattern in which the plural kinds of prediction blocks are arranged in the encoding block, so as to have a highest coding efficiency for the encoding block; and
combining the predicted image data corresponding to the plural kinds of prediction blocks having different configurations so that the plural kinds of prediction blocks are arranged in the encoding block according to the decided arrangement pattern, thereby generating predicted image data corresponding to the encoding block.

11. The encoding method of Claim 10 wherein
the prediction step including a step of:
generating block arrangement information that indicates the arrangement pattern of the plural kinds of prediction blocks in the encoding block.

12. A decoder that predictively decodes coded data which is obtained by predictively coding image data, in units of frame, by using a pixel value correlation between frames, including:
a data prediction unit for performing a prediction process of predicting image data corresponding a target frame to be processed, in units of prediction block being composed of plural pixels, which is obtained by dividing the target frame, thereby to generate predicted image data; and
a data decoding unit for decoding the coded data corresponding to the target frame in units of decoding block that is composed of a plurality of the prediction blocks, by using predicted image data corresponding to the decoding block.

13. The decoder of Claim 12 wherein
the data prediction unit includes a data generation unit for generating predicted image data corresponding to each of plural kinds of prediction blocks having different configurations; and selects predicted image data corresponding to a prediction block having a predetermined configuration, in accordance with block identification information that indicates predicted image data of a prediction block having a configuration, which was selected from the predicted image data corresponding to the plural kinds of prediction blocks having different configurations at predictive coding of the image data, thereby generating predicted image data corresponding to the decoding block from the predicted image data of the selected prediction block.

14. The decoder of Claim 12 wherein
the data prediction unit includes a data generation unit for generating predicted image data corresponding to each of plural kinds of prediction blocks having different configurations; and combines the predicted image data corresponding to the plural kinds of prediction blocks having different configurations, in accordance with block arrangement information that indicates an arrangement pattern of the plural prediction blocks in the decoding block, thereby generating predicted image data corresponding to the decoding block.

15. A decoder that predictively decodes coded data which is obtained by predictively coding image data, in units of frame, by using a pixel value correlation between frames, including:
a first predictive decoding unit that includes: a first data prediction unit for performing a prediction process of predicting image data corresponding to a target frame to be processed, in units of first prediction block being composed of plural pixels, which is obtained by dividing the target frame, thereby to generate first predicted image data; and a first data decoding unit for decoding coded data corresponding to the target frame in units of first decoding block that is composed of a plurality of the first prediction blocks, by using first predicted image data corresponding to the first decoding block;
a second predictive decoding unit that includes: a second data prediction unit for performing a prediction process of predicting image data corresponding to a target frame to be processed, in units of second prediction block being composed of plural pixels, which is obtained by dividing the frame, thereby to generate second predicted image data; and a second data decoding unit for decoding coded data corresponding to the target frame in units of second decoding block that is obtained by dividing the second prediction block, by using second predicted image data corresponding to the second decoding block; and
a selector for supplying the coded data to one of the first predictive decoding unit and the second predictive decoding unit, in accordance with an instruction signal from outside.

16. A decoding method for predictively decoding coded data that is obtained by predictively coding image data, in units of frame, by using a pixel value correlation between frames, including:
a prediction step of performing a prediction process of predicting image data corresponding to a target frame to be processed, in units of prediction block being composed of plural pixels, which is obtained by dividing the frame, thereby generating predicted image data; and
a decoding step of decoding the coded data corresponding to the target frame, in units of decoding block that is composed of a plurality of the prediction blocks, by using predicted image data corresponding to the decoding block.

17. The decoding method of Claim 16 wherein
the prediction step including steps of:
generating predicted image data corresponding to each of plural kinds of prediction blocks having different configurations;
selecting predicted image data corresponding to a prediction block having a predetermined configuration, in accordance with block identification information that indicates predicted image data of a prediction block having a configuration, which was selected from the predicted image data corresponding to the plural kinds of prediction blocks having different configurations at predictive coding of the image data; and
generating predicted image data corresponding to the decoding block from the predicted image data of the selected prediction block.

18. The decoding method of Claim 16 wherein
the prediction step includes steps of:
generating predicted image data corresponding to each of plural kinds of prediction blocks having different configurations; and
combining the predicted image data corresponding to the plural kinds of prediction blocks having different configurations, in accordance with block arrangement information that indicates an arrangement pattern of the plural kinds of prediction blocks in the decoding block, thereby generating predicted image data corresponding to the decoding block.
